(19) Europäisches Patentamt
European Patent Office
Office européen des brevets

(11) **EP 3 695 951 B1**

(12) **EUROPEAN PATENT SPECIFICATION**

(45) Date of publication and mention
of the grant of the patent:
**16.02.2022   Bulletin 2022/07**

(21) Application number: **20152593.8**

(22) Date of filing: **20.01.2020**

(51) International Patent Classification (IPC):
**B29C 64/106** (2017.01)    **B29C 64/118** (2017.01)
**B29C 64/194** (2017.01)    **B29C 64/241** (2017.01)
**B29C 64/209** (2017.01)    **B33Y 30/00** (2015.01)
**B29C 70/38** (2006.01)

(52) Cooperative Patent Classification (CPC):
**B29C 64/106; B29C 64/118; B29C 64/194;**
**B29C 64/209; B29C 64/241; B33Y 30/00;**
B29C 70/382

(54) **SHAPING APPARATUS**

FORMUNGSVORRICHTUNG

APPAREIL DE FORMAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.02.2019   JP 2019026967**
**17.09.2019   JP 2019168388**

(43) Date of publication of application:
**19.08.2020   Bulletin 2020/34**

(73) Proprietor: **FUJIFILM Business Innovation Corp.**
**Minato-ku**
**Tokyo (JP)**

(72) Inventors:
• **KATSUTA, Nobuhiro**
  **Ebina-shi, Kanagawa (JP)**
• **SASAKI, Shigehiko**
  **Ebina-shi, Kanagawa (JP)**

(74) Representative: **Haseltine Lake Kempner LLP**
**Bürkleinstrasse 10**
**80538 München (DE)**

(56) References cited:
**EP-A1- 2 508 327**      **WO-A1-2018/151074**
**WO-A1-2018/189062**      **WO-A1-2018/200518**

**Description**

Background

The present invention relates to a shaping apparatus.

Related Art

US 10046511 discloses a configuration in which a shaping material is twisted by 180 degrees when a curve is formed by the shaping material in a three-dimensional shaping apparatus. Additionally, documents EP 2 508 327 A1, WO 2018/151074 A1, WO 2018/189062 A1, WO 2018/189062 A1 provide background information pertaining to the preamble of claim 1.

Summary of Invention

In a configuration in which a shaping unit moves relative to a receiving portion such as a stand in a curved shape and discharges the shaping material to the receiving portion while twisting the shaping material by 180 degrees or more, the continuous fibers may be twisted.

Aspects of non-limiting embodiments of the present disclosure relate to reduce twisting of continuous fibers as compared with a configuration in which a shaping material is discharged on a receiving portion while being rotated by 180 degrees or more.

According to a first aspect of the claimed invention there is provided a shaping apparatus according to claim 1.

In a second aspect of the shaping apparatus, each of the shaping units are configured to discharge the shaping material on the receiving portion while rotating the shaping material at a rotation angle depending on a bending angle of each of the shaping units with respect to the receiving portion.

In a third aspect of the shaping apparatus, the rotation angle is larger than the bending angle.

In a fourth aspect of the shaping apparatus, the rotation angle is equal to or less than 90 degrees.

In a fifth aspect of the shaping apparatus, each of the shaping units are configured to discharge the shaping material on the receiving portion while rotating the shaping material to the opposite direction in a state where tension is applied to the shaping material.

In a sixth aspect of the shaping apparatus, each of the shaping units include a discharging portion configured to discharge the shaping material on the receiving portion; a conveyance portion configured to convey the shaping material to the discharging portion while rotating the shaping material to the opposite direction; and an applying portion configured to apply tension to the shaping material on an upstream side to the conveyance portion.

In a seventh aspect of the shaping apparatus, the supply mechanism and the conveyance portion are configured to rotate to the opposite direction to convey the shaping material to the discharging portion while rotating the shaping material to the opposite direction.

In an eighth aspect of the shaping apparatus, the supply mechanism includes: a supply portion configured to supply the bundle; and an impregnating portion configured to impregnate the bundle supplied from the supply portion with a resin, in which the supply portion, the impregnating portion, and the conveyance portion are configured to rotate to the opposite direction to convey the shaping material to the discharging portion while rotating the shaping material to the opposite direction.

In a ninth aspect of the shaping apparatus, each of the shaping units are configured to change setting of at least one of the rotation angle and a rotation speed of the shaping material depending on a ratio of the continuous fibers to the shaping material.

In a tenth aspect of the shaping apparatus, setting of shaping conditions is changed depending on the rotation angle and the rotation speed of the shaping material in each of the shaping units.

In an eleventh aspect of the shaping apparatus, each of the shaping units are configured to: discharge the shaping material on the receiving portion while rotating the shaping material in a range of less than 180 degrees to a direction opposite to a bending direction with respect to the receiving portion; and then discharge the shaping material on the receiving portion while rotating the shaping material in a forward direction along the bending direction.

In a twelfth aspect of the shaping apparatus, while each of the shaping units move relative to the receiving portion in the curved shape, each of the shaping units are configured to repeat following processes: discharging the shaping material on the receiving portion while rotating the shaping material in a range of less than 180 degrees to a direction opposite to a bending direction with respect to the receiving portion; and then discharging the shaping material on the receiving portion while rotating the shaping material in a forward direction along the bending direction.

In a thirteenth aspect of the shaping apparatus, the following conditions 1 and 2a are satisfied when each of the shaping units move linearly relative to the receiving portion and discharges the shaping material on the receiving portion; and the following conditions 1 and 2b are satisfied when each of the shaping units move relative to the receiving portion in the curved shape and discharges the shaping material on the receiving portion:

$$\text{Condition 1: } |\theta_{tw}| \leq \pi/2$$

$$\text{Condition 2a: } |d\omega_{tw}| \leq Ef$$

$$\text{Condition 2b: } |d(1 + k_{tw})/R| \leq Ef$$

in which,

$\theta_{tw}$ is a twist angle of the shaping material as the rotation angle;
d [mm] is a farthest distance between the continuous fibers that are farthest away among the plurality of continuous fibers of the shaping material along the perpendicular direction to the proceeding direction of each of the shaping units;
Ef is an elongation at break of the continuous fiber;
$\omega_{tw}$ [rad/mm] is a twist angle per unit moving distance when each of the shaping units move linearly relative to the receiving portion;
$\theta_{dp}$ [rad] is the bending angle of the discharging mechanism with respect to the receiving portion when the discharging mechanism moves relative to the discharge portion in the curved shape;
R [mm] is the radius of curvature of the curved shape; and
$k_{tw}$ is a ratio of the bending angle $\theta_{dp}$ to the twist angle $\theta_{tw}$.

In a fourteenth aspect of the shaping apparatus, the other shaping units are configured to rotate the shaping material when the larger curvature is larger than a predetermined threshold value.

In a fifteenth aspect of the shaping apparatus, each of the shaping units are configured to move relative to the receiving portion and discharges the shaping material on the receiving portion in a curved shape so that the innermost continuous fiber on the inner peripheral side of the
shaping material and the outermost continuous fiber on the outer peripheral side of the shaping material approach each other.

According to the configuration of the first aspect, twisting of the continuous fibers is reduced as compared with a configuration in which the rotation angles of the plurality of shaping units are always the same.

According to the configuration of the second aspect, cracks in a curved portion of the shaping material are reduced as compared with a configuration in which the rotation angle of the shaping material is constant regardless of the bending angle of each of the shaping units with respect to the receiving portion.

According to the configuration of the third aspect, cracks in the curved portion of the shaping material are reduced as compared with a configuration in which the shaping material is discharged to the receiving portion while being rotated at a rotation angle equal to or less than the bending angle.

According to the configuration of the fourth aspect, the twisting of the continuous fibers and cracks in the curved portion of the shaping material are reduced as compared with a configuration in which the shaping material is discharged to the receiving portion while being rotated at a rotation angle larger than the bending angle and more than 90 degrees.

According to the configuration of the fifth aspect, cracks in the curved portion of the shaping material are reduced as compared with a configuration in which the shaping material in a state in which no tension is applied is discharged to the receiving portion.

According to the configuration of the sixth aspect, cracks in the curved portion of the shaping material are reduced as compared with the configuration in which tension is applied to the shaping material on the downstream side of the conveyance portion.

According to the configuration of the seventh aspect, twisting of the continuous fibers is reduced as compared with a configuration in which only the conveyance portion rotates.

According to the configuration of the eighth aspect, twisting of the continuous fibers is reduced as compared with a configuration in which only the conveyance portion and one of the supply portion and the impregnating portion rotate.

According to the configuration of the ninth aspect, cracks in the curved portion of the shaping material are reduced as compared with a configuration in which the rotation angle and the rotation speed of the shaping material in each of the shaping units are constant regardless of the ratio of the continuous fibers to the shaping material.

According to the configuration of the tenth aspect, shaping failure of a shaped object is reduced as compared with a configuration in which the shaping conditions are constant, regardless of the rotation angle and the rotation speed of the shaping material in each of the shaping units.

According to the configuration of the eleventh aspect, twisting of the continuous fibers is reduced as compared with a configuration in which the shaping material is rotated only to the opposite side of the bending direction with respect to the receiving portion.

According to the configuration of the twelfth aspect, cracks in the curved portion of the shaping material are reduced as compared with a configuration in which the shaping material is discharged to the receiving portion while being rotated in a range of less than 180 degrees to the opposite side of the bending direction with respect to the receiving portion, and then the shaping material is discharged to the receiving portion while being rotated in a forward direction along the bending direction, which is performed only once.

According to the configuration of the thirteenth aspect, cracks in the curved portion of the shaping material are reduced as compared with a configuration in which only the condition 1 is satisfied.

According to the configuration of the fourteenth aspect, twisting of the continuous fibers is reduced as compared with a configuration in which the shaping material is always rotated by the plurality of shaping units.

According to the configuration of the fifteenth aspect, cracks in the curved portion of the shaping material are reduced as compared with a configuration in which the shaping material is discharged to the receiving portion so that he continuous fiber on the inner peripheral side of the shaping material and the continuous fiber on the outer peripheral side of the shaping material are constant.

Brief Description of Drawings

Exemplary embodiment(s) of the present invention will be described in detail based on the following figures, wherein:

Fig. 1 is a schematic diagram showing a configuration of a shaping apparatus according to the exemplary embodiment;
Fig. 2 is a cross-sectional view of a bundle of continuous fibers used in the shaping apparatus according to the exemplary embodiment;
Fig. 3 is a cross-sectional view of a shaping material used in the shaping apparatus according to the exemplary embodiment;
Fig. 4 is a schematic diagram showing a state in which a support of the shaping apparatus shown in Fig. 1 is rotated by 90 degrees;
Fig. 5 is a block diagram showing a configuration of a control unit of the shaping apparatus according to the exemplary embodiment;
Fig. 6 shows a U-shaped part of a shaped object to be shaped by the shaping apparatus according to the exemplary embodiment;
Fig. 7 is a schematic diagram showing operation of a shaping unit according to the exemplary embodiment;
Fig. 8 shows a relationship between a bending angle of the shaping unit and a rotation angle of the shaping material according to the exemplary embodiment;
Fig. 9 is a cross-sectional view of the shaping material forming the U-shaped part of the shaped object according to the exemplary embodiment;
Fig. 10 shows a path of continuous fibers in the U-shaped part of the shaped object according to the exemplary embodiment;
Fig. 11 is a schematic diagram showing operation of a shaping unit according to a comparative example;
Fig. 12 shows a path of continuous fibers in a U-shaped part of a shaped object according to the comparative example;
Fig. 13 is a cross-sectional view of a shaping material deformed into a flat shape;
Fig. 14 shows a posture of the shaping material deformed into a flat shape when being discharged;
Fig. 15 is a schematic diagram showing a configuration of a shaping apparatus according to a third modification;
Fig. 16 is a schematic diagram showing operation of a shaping unit according to a fourth modification;
Fig. 17 shows a path of continuous fibers in the U-shaped part of the shaped object according to the fourth modification;
Fig. 18 is a schematic diagram showing a mechanism which rotates the shaping materials according to the modifications;
Fig. 19 is a schematic diagram showing a rotation mechanism in a case where a cross section of the shaping material is non-circular;
Fig. 20 shows a cross section of the shaping material;
Fig. 21 shows a path length of an innermost side fiber and a path length of an outermost side fiber;
Fig. 22 shows a path at the time of linear shaping;
Fig. 23 is a schematic diagram showing operation of a configuration according to the claimed invention of a shaping apparatus including a plurality of shaping units;

Fig. 24 is a schematic diagram showing a configuration according to the claimed invention of a shaping apparatus including a plurality of shaping units; and

Fig. 25 shows control of a plurality of shaping units according to the claimed invention.

Detailed Description

Hereinafter, an examplary embodiment is described based on the drawings. As shown in the drawings, an arrow H indicates an apparatus vertical direction (perpendicular direction), an arrow W indicates an apparatus width direction (horizontal direction), and an arrow D indicates an apparatus length direction (horizontal direction).

(Shaping Apparatus 10)

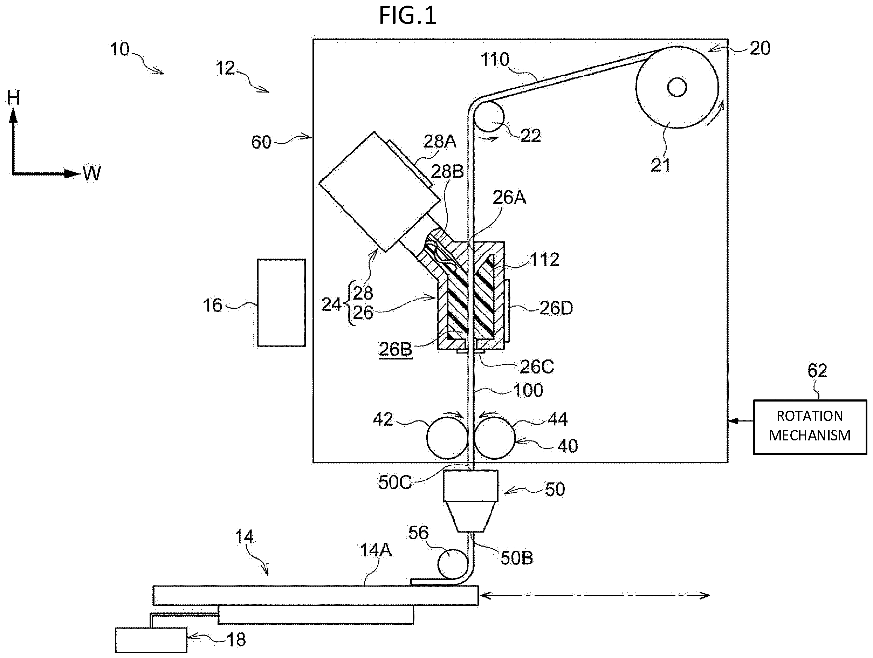

First, a shaping apparatus 10 is described. Fig. 1 shows a schematic configuration of the shaping apparatus 10.

The shaping apparatus 10 shown in Fig. 1 is an apparatus which shapes a shaped object. Specifically, the shaping apparatus 10 is a three-dimensional shaping apparatus (so-called 3D printer) with a so-called fused deposition modeling system (also referred to as an FDM system). More specifically, the shaping apparatus 10 forms each layer by a shaping material 100 based on layer data of a plurality of layers to shape a shaped object.

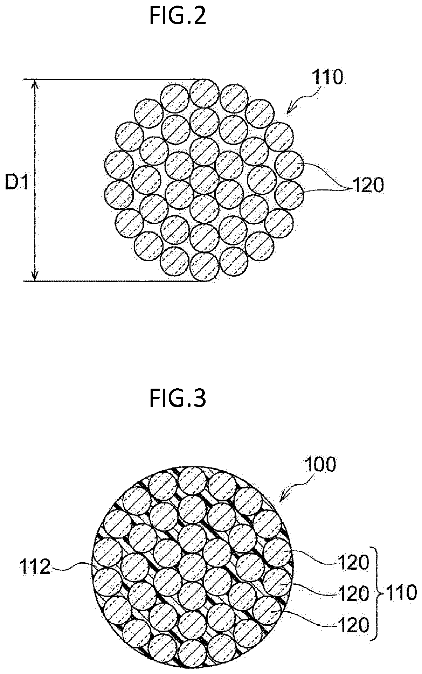

As shown in Fig. 1, the shaping apparatus 10 according to the exemplary embodiment includes a shaping unit 12, a stand 14 (as receiving portion), a moving mechanism 18, and a control unit 16. The shaping material 100 (see Fig. 3) used in the shaping apparatus 10 is a linear shaping material in which a bundle 110 of continuous fibers 120 (hereinafter referred to as a fiber bundle 110) is impregnated with a resin 112.

(Stand 14, Moving Mechanism 18)

A stand 14 shown in Fig. 1 is an example of a receiving portion. Specifically, the stand 14 is configured to receive the shaping material 100. More specifically, the shaping material 100 discharged to the stand 14 is received on the stand 14. More specifically, a shaped object is shaped by the shaping material 100 on the stand 14.

As shown in Fig. 1, the stand 14 is disposed below the shaping unit 12. The stand 14 has a receiving surface 14A on which the shaping material 100 is discharged. The receiving surface 14A can also be referred to as a surface on which the shaping material 100 is placed. The receiving surface 14A faces a side of the shaping unit 12. That is, the stand 14 faces upward. More specifically, the receiving surface 14A is a horizontal surface.

The moving mechanism 18 shown in Fig. 1 is a mechanism which moves the stand 14. Specifically, the moving mechanism 18 is, for example, a mechanism which moves the stand 14 in the apparatus vertical direction, the apparatus width direction, and the apparatus length direction. In other words, the moving mechanism 18 can also be referred to as a mechanism which moves the shaping unit 12 in the apparatus vertical direction, the apparatus width direction, and the apparatus length direction relative to the stand 14.

More specifically, the moving mechanism 18 can move the stand 14 to any position in the apparatus vertical direction, the apparatus width direction, and the apparatus length direction. Accordingly, the moving mechanism 18 can move the stand 14 in a curved shape. In other words, the shaping unit 12 can move on the curve along the receiving surface 14A relative to the stand 14.

For example, a three-axis robot capable of moving the stand 14 to any position in the apparatus vertical direction, the apparatus width direction, and the apparatus length direction is used as the moving mechanism 18.

(Shaping Unit 12)

The shaping unit 12 shown in Fig. 1 is an example of a discharging mechanism. Specifically, the shaping unit 12 is a unit which discharges the shaping material 100 to the stand 14. More specifically, the shaping unit 12 includes a support 60, a supply mechanism 20, a conveyance portion 40, a discharging portion 50, a pressure roller 56, and a rotation mechanism 62.

(Support 60)

The support 60 supports each portion of the supply mechanism 20 and the conveyance portion 40.

(Supply Mechanism 20)

The supply mechanism 20 supplies the linear shaping material 100 in which the fiber bundle 110 is impregnated with the resin 112. Specifically, the supply mechanism 20 includes a supply portion 21, a winding roller 22, and an impregnating portion 24.

(Supply Portion 21)

The supply portion 21 has a function of supplying the fiber bundle 110 to the winding roller 22. Specifically, the supply portion 21 includes a reel around which the fiber bundle 110 is wound. The supply portion 21 is rotatably supported by the support 60.

The supply portion 21 rotates in a counterclockwise direction in Fig. 1 to deliver the fiber bundle 110 to the apparatus width direction (left side in Fig. 1).

The fiber bundle 110 is obtained by bundling a plurality of continuous fibers 120 without being twisted. In the exemplary embodiment, as an example, carbon fibers having a diameter of 0.005 mm are used as the continuous fibers 120, and 1000 or more of the continuous fibers 120 are bundled. As shown in Fig. 2, a cross section of the fiber bundle 110 has a circular shape with a diameter (D1 in the drawing) of 0.3 mm or more and 0.4 mm or less in a bundled state. In Fig. 2, the cross section is shown with a reduced number of fibers.

(Winding Roller 22)

As shown in Fig. 1, the winding roller 22 is disposed on one side (left side in Fig. 1) of the supply portion 21 in the apparatus width direction, and is rotatably supported by the support 60. The fiber bundle 110 unwound from the supply portion 21 is wound around the winding roller 22.

The fiber bundle 110 unwound to the apparatus width direction from the supply portion 21 is wound around the winding roller 22, so that the fiber bundle 110 is fed downward by changing a direction downward. Therefore, the winding roller 22 has a function of guiding the fiber bundle 110 downward.

(Impregnating Portion 24)

The impregnating portion 24 impregnates the fiber bundle 110 with a resin to form the linear shaping material 100. As shown in Fig. 1, the impregnating portion 24 is disposed on a downstream side of the winding roller 22 in a feeding direction in which the shaping material 100 is fed from the supply portion 21. Specifically, the impregnating portion 24 is disposed on a lower side of the winding roller 22.

The impregnating portion 24 includes a passing portion 26 through which the fiber bundle 110 passes and a resin delivery portion 28 which delivers the resin to the passing portion 26.

The resin is housed in the resin delivery portion 28, and the resin delivery portion 28 includes a heater 28A which heats the housed resin, and a screw 28B which delivers the heated resin to the passing portion 26. In the exemplary embodiment, as an example, a polypropylene resin is housed inside the resin delivery portion 28 as the resin. The heater 28A is melted by heating the housed polypropylene resin to, for example, 200°C or higher and 300°C or lower.

The passing portion 26 is configured such that the fiber bundle 110 delivered from the supply portion 21 passes therethrough. The passing portion 26 has a cylindrical shape extending in the vertical direction. The passing portion 26 includes a receiving port 26A which receives the fiber bundle 110 unwound from the supply portion 21, and a columnar retaining portion 26B in which the resin is retained so as to surround the fiber bundle 110 passing therethrough from a circumferential direction. Further, the passing portion 26 includes: a discharging head 26C which discharges the shaping material 100 in which the fiber bundle 110 is impregnated with the resin; and a heater 26D which is attached to an outer circumferential wall of the retaining portion 26B and heats the resin retained in the retaining portion 26B. The receiving port 26A, the retaining portion 26B, and the discharging head 26C are arranged in this order from the upper to the lower. In the exemplary embodiment, the heater 26D heats the polypropylene resin retained in the retaining portion 26B to 200°C or higher and 300°C or lower as an example.

In the impregnating portion 24, the resin delivery portion 28 delivers the heated resin to the retaining portion 26B of the passing portion 26. The passing portion 26 is received from the receiving port 26A, and the fiber bundle 110 passing through the retaining portion 26B is impregnated with the resin. The passing portion 26 discharges the linear shaping material 100 in which the fiber bundle 110 is impregnated with the resin from the discharging head 26C. In the shaping material 100 discharged from the discharging head 26C, as shown in Fig. 3, gaps between the fibers are impregnated with the resin. A cross section of the shaping material 100 has a circular shape with a diameter of 0.3 mm or more and 0.4 mm or less. In Fig. 3, the cross section is shown with a reduced number of fibers.

In this way, the fibers are bonded to each other by the resin by impregnating the fiber bundle 110 with the resin. Accordingly, the impregnating portion 24 functions as a bonding means for bonding the fibers to each other.

(Conveyance Portion 40)

The conveyance portion 40 has a function of conveying the shaping material 100 from the supply mechanism 20 to the discharging portion 50. As shown in Fig. 1, the conveyance portion 40 is disposed on a downstream side of the impregnating portion 24 in the feeding direction in which the shaping material 100 is fed from the supply portion 21. Specifically, the conveyance portion 40 is disposed on a lower side of the impregnating portion 24.

The conveyance portion 40 includes, for example, a pair of conveyance rollers 42 and 44. The conveyance roller 44 is disposed on a side opposite to the conveyance roller 42 with respect to the shaping material 100.

The conveyance rollers 42 and 44 are rotatably supported by the support 60. The conveyance rollers 42 and 44 rotate in the circumferential direction by transmitting a driving force from a driving means (not shown). In the conveyance portion 40, the conveyance rollers 42 and 44 which rotate sandwich the shaping material 100 and convey it at a speed of, for example, 30 mm/sec. A conveyance speed of the shaping material 100 is not limited to 30 mm/sec.

The pair of conveyance rollers 42 and 44 may include a heating portion which heats the shaping material 100. The conveyance portion 40 may include a conveyance belt instead of the conveyance rollers 42 and 44.

(Discharging Portion 50)

The discharging portion 50 has a function of discharging the shaping material 100 to the stand 14. As shown in Fig. 1, the discharging portion 50 is disposed on a downstream side of the conveyance portion 40 in the feeding direction in which the shaping material 100 is fed from the supply portion 21. Specifically, the discharging portion 50 is disposed a lower side of the conveyance portion 40.

The discharging portion 50 includes an inflow port 50C into which the shaping material 100 fed from the conveyance portion 40 flows and a discharging port 50B for discharging the shaping material 100 which has flowed in from the inflow port 50C to the receiving surface 14A of the stand 14. The discharging portion 50 may include a heating portion which heats the shaping material 100.

(Pressure Roller 56)

The pressure roller 56 functions as a pressurizing portion which pressurizes the shaping material 100 discharged from the discharging portion 50. Specifically, the shaping material 100 is sandwiched between the pressure roller 56 and the stand 14, and the shaping material 100 is pressed against the receiving surface 14A of the stand 14 to pressurize the shaping material 100. The pressure roller 56 pressurizes the shaping material 100, so that a height of the shaping material 100 discharged to the stand 14 is aligned.

The pressure roller 56 may include a heating portion which heats the shaping material 100. For example, a heating source provided inside the pressure roller 56 is used as the heating portion. Further, the heating portion may be a heating device which heats the pressure roller 56 from the outside. Examples of the heating source and the heating device include a heater using an electric heating wire, a halogen lamp, or the like.

(Rotation Mechanism 62)

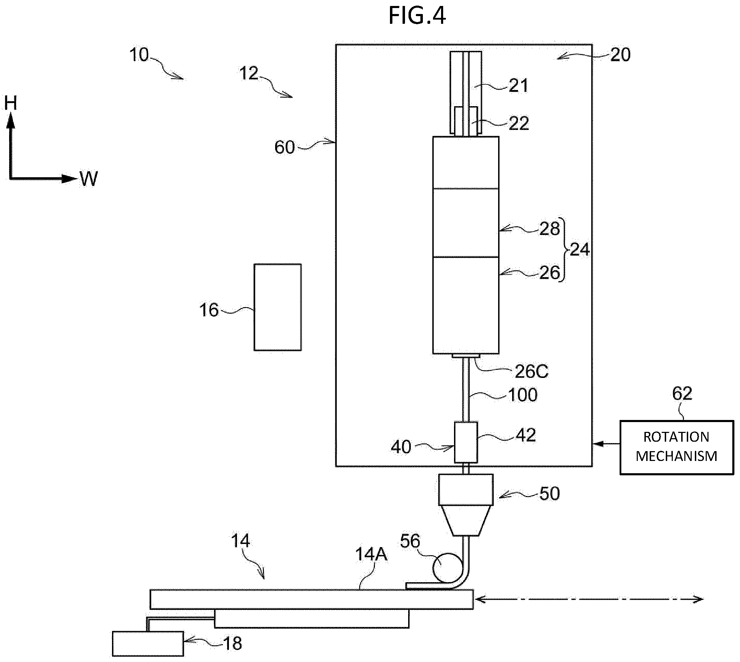

The rotation mechanism 62 shown in Fig. 4 rotates the support 60 around an axis of the shaping material 100 discharged downward from the discharging portion 50 toward the stand 14. In other words, the rotation mechanism 62 rotates the support 60 around an axis along the vertical direction. In other words, the rotation mechanism 62 rotates and reverses the support 60 which supports the supply mechanism 20 and the conveyance portion 40 around an axis along a perpendicular direction to the receiving surface 14A of the stand 14.

In other words, the rotation mechanism 62 has a function of rotating the supply mechanism 20 and the conveyance portion 40. Specifically, the rotation mechanism 62 has a function of rotating the supply portion 21, the winding roller 22, the impregnating portion 24, and the conveyance portion 40. Incidentally, Fig. 4 shows a state in which the support 60 is rotated by 90 degrees around the axis along the vertical direction from the state shown in Fig. 1.

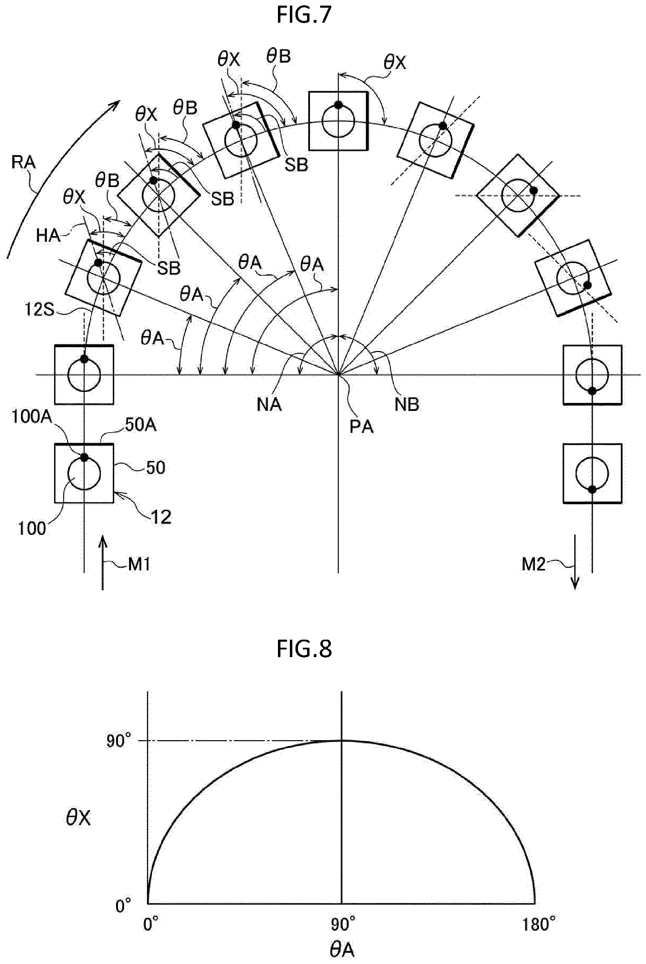

The rotation mechanism 62 has a function of twisting the shaping material 100 around the axis along the vertical direction by rotating the support 60. Specifically, in a case where the shaping unit 12 moves relative to the stand 14 in a curved shape, the rotation mechanism 62 rotates the shaping material 100 in a range of less than 180 degrees in an opposite direction SB (see Fig. 7) on a side opposite to a bending direction RA of the shaping unit 12 with respect to the stand 14. The rotation in the opposite direction SB is rotation around the axis of the shaping material 100, and movement in the bending direction RA can be referred to as revolution around a movement center PA of the shaping material 100. Specific rotation operation of the rotation mechanism 62 will be described later. Further, in Fig. 7, for convenience of description, the discharging portion 50 is shown away from the movement center PA of the discharging portion 50 moving in the bending direction RA.

(Control Unit 16)

The control unit 16 controls operation of each unit of the shaping apparatus 10. Specifically, the control unit 16 includes a storage portion including a ROM, a storage, or the like in which a program is stored, and a processor which operates according to the program, and the operation of each unit of the shaping apparatus 10 is controlled by reading and executing the program stored in the storage portion.

In the embodiments, the term "processor" refers to hardware in a broad sense. Exa mples of the processor includes general processors (e.g., CPU: Central Processing Unit), dedicated processors (e.g., GPU: Graphics Processing Unit, ASIC: Application Integrated Circuit, FPGA: Field Programmable Gate Array, and programmable logic device).

In the embodiments, the term "processor" is broad enough to encompass one processor or plural processors in collaboration which are located physically apart from each other but may work cooperatively. The order of operations of the processor is not limited to one described in the embodiments above, and may be changed.

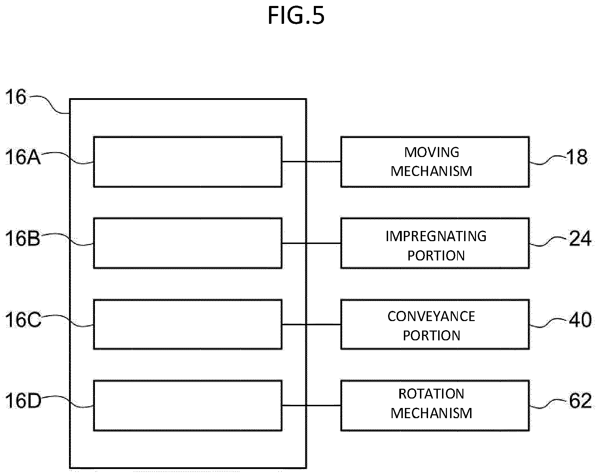

As shown in Fig. 5, the control unit 16 includes, as a functional configuration, a moving mechanism control unit 16A which controls driving of the moving mechanism 18, an impregnating portion control unit 16B which controls driving of the impregnating portion 24; a conveyance portion control unit 16C which controls driving of the conveyance portion 40, and a rotation mechanism control unit 16D which controls operation of the rotation mechanism 62. Specifically, the impregnating portion control unit 16B controls driving of the heater 28A, the screw 28B, and the heater 26D of the impregnating portion 24.

The control unit 16 controls operation of the moving mechanism 18, the impregnating portion 24, the conveyance portion 40, and the rotation mechanism 62 so that the following shaping operation is executed based on a plurality of layer data created from three-dimensional data of the shaping object.

(Shaping Operation of Shaping Apparatus 10)

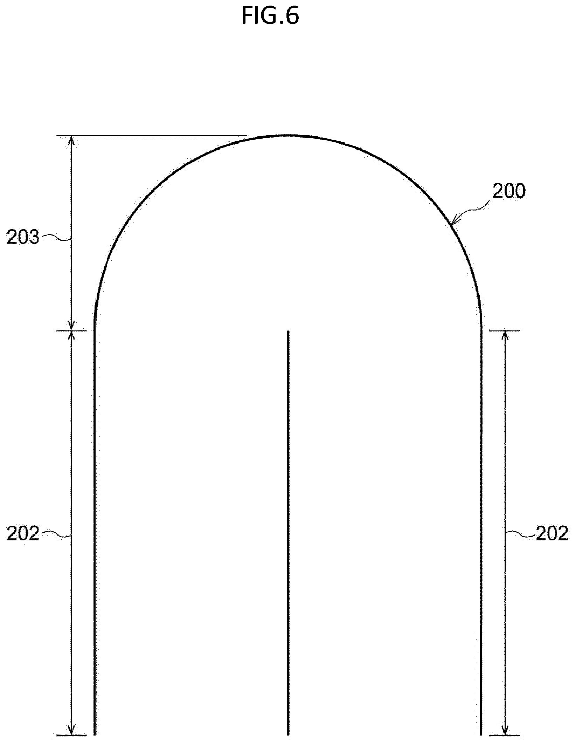

Here, shaping operation of shaping a shaped object including a curve part based on the plurality of layer data created from the three-dimensional data of the shaped object is described. Specifically, as shown in Fig. 6, the shaping operation of shaping the shaped object including a U-shaped part 200 having a linear part 202 and a curve part 203 based on the layer data is described.

In the case of shaping the U-shaped part 200, the moving mechanism 18 moves the stand 14 to move the shaping unit 12 relative to the stand 14 in a U shape. Specifically, first, the shaping unit 12 relatively moves in a linear shape in a plan view in a first direction M1 (see Fig. 7), for example, along the receiving surface 14A of the stand 14 (hereinafter referred to as a first linear movement). The first direction M1 is, for example, the apparatus width direction W shown in Fig. 1.

Next, the shaping unit 12 moves relative to, for example, the receiving surface 14A of the stand 14 in a curved shape (hereinafter referred to as a curve movement). Next, the shaping unit 12 relatively moves in a linear shape in a plan view in a direction M2 opposite to the first direction M1 (see Fig. 7), for example, along the receiving surface 14A of the stand 14 (hereinafter referred to as a second linear movement).

In the curve movement, specifically, as shown in Fig. 7, the shaping unit 12 moves relatively along the receiving surface 14A of the stand 14 (see Fig. 1) while being bent in a bending direction RA (see a direction of an arrow RA). More specifically, in the curve movement, the shaping unit 12 moves relatively in an arc shape in a plan view. The bending direction RA is a direction in which the shaping unit 12 proceeds in the curve movement. The bending direction RA is a clockwise direction (that is, a direction toward a right direction) in space of Fig. 7.

In the shaping unit 12, as shown in Fig. 7, a front portion 50A of the discharging portion 50 moves relatively in a state toward a moving direction downstream side (proceeding direction). Fig. 7 perspectively shows the discharging port 50B of the discharging portion 50 and the shaping material 100 discharged from the discharging port 50B. In the first linear movement, a part of the shaping material 100 facing the proceeding direction of the discharging portion 50 is indicated by a point 100A. It can be said that the point 100A indicates a part of the shaping material 100 facing the proceeding direction of the discharging portion 50 at the start of the curve movement.

In the curve movement of the shaping unit 12, the rotation mechanism 62 rotates the support 60 around the axis along the vertical direction in the opposite direction SB (see a direction of an arrow SB) on a side opposite to the bending direction RA The bending direction RA is a clockwise direction (that is, a direction toward the right direction) in the space of Fig. 7, whereas the opposite direction SB is set as a counterclockwise direction (that is, a direction toward the left direction) in the space of Fig. 7.

In the shaping apparatus 10 according to the exemplary embodiment, the shaping material 100 is discharged on the stand 14 while rotating in a range of less than 180 degrees in the opposite direction SB in the curve movement of the shaping unit 12.

Specifically, the rotation mechanism 62 discharges the shaping material 100 to the stand 14 while rotating the shaping material 100 at a rotation angle $\theta X$ corresponding to a bending angle $\theta A$ of the shaping unit 12 with respect to the stand 14 in the curve movement of the shaping unit 12. The bending angle θA is an angle formed by a line segment connecting the center of the shaping material 100 and the movement center PA at a start position of the curve movement and a line segment connecting the center of the shaping material 100 and the movement center PA during the curve movement. The rotation angle θX is an angle with respect to a proceeding path 12S of a line HA connecting the part (point 100A) of the shaping material 100 facing the proceeding direction of the discharging portion 50 and the center of the shaping material 100 at the start of the curve movement.

In a range where the bending angle θA is less than 90 degrees (a range of NA in Fig. 7), the rotation angle θX is set as a rotation angle larger than the bending angle θA. Specifically, in a range where the bending angle θA is less than 90 degrees, the rotation angle θX is set as a rotation angle larger than the bending angle θA and equal to or less than 90 degrees.

In a range where the bending angle θA is less than 90 degrees, as shown in Fig. 7 and Fig. 8, the rotation angle θX of the shaping material 100 increases as the bending angle θA increases. An angle θB shown in Fig. 7 is the same angle as the bending angle θA. Fig. 8 shows a relationship between the bending angle θA and the rotation angle θX.

Further, when the bending angle θA is 90 degrees, the rotation angle θX is set as 90 degrees same as the bending angle θA of the shaping unit 12. Further, in a range where the bending angle θA is more than 90 degrees and less than 180 degrees (a range of NB in Fig. 7), the rotation angle θX of the shaping material 100 decreases with the relative movement of the discharging portion 50. Specifically, in a range where the bending angle θA is more than 90 degrees and less than 180 degrees (a range of NB in Fig. 7), reverse operation in a range where the bending angle θA is from 0 degree to less than 90 degrees (a range of NA in Fig. 7) is performed on the shaping material 100 (see Fig. 8). That is, in a range where the bending angle θA is more than 90 degrees and less than 180 degrees (a range of NB in Fig. 7), the rotation mechanism 62 rotates the shaping material 100 in a forward direction SA (see a direction of an arrow SA) along the bending direction RA around the axis of the support 60 along the vertical direction to twist the shaping material 100 back.

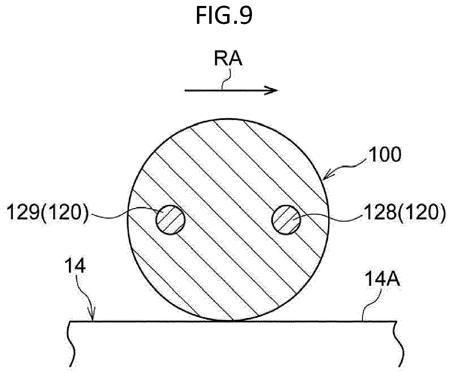

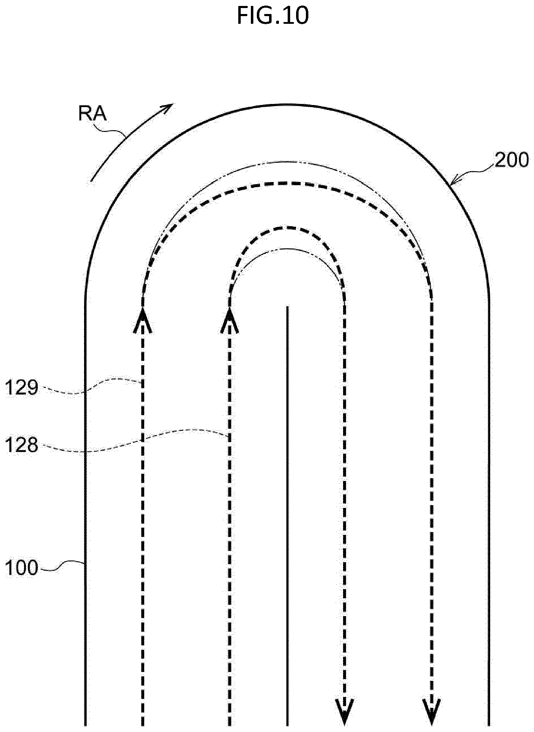

Then, in the exemplary embodiment, a continuous fiber 128 (see Fig. 9) disposed on an inner peripheral side (that is, a side of the bending direction RA) of the shaping material 100 and a continuous fiber 129 (see Fig. 9) disposed on an outer peripheral side of the shaping material 100 (that is, a side opposite to the bending direction RA) among a plurality of continuous fibers 120 forming a fiber bundle 110 proceed on a path indicated by a broken line in Fig. 10 at the start of the curve movement of the shaping unit 12. In Fig. 9, only two of the continuous fiber 128 on the inner peripheral side and the continuous fiber 129 on the outer peripheral side among the plurality of continuous fibers 120 constituting the fiber bundle 110 are schematically shown, and illustration of the other continuous fibers 120 is omitted.

That is, the continuous fiber 128 proceeds on the inner peripheral side of the shaping material 100 so as to approach the continuous fiber 129. In other words, the continuous fiber 128 proceeds on the inner peripheral side of the shaping material 100 so as to increase the bending radius. On the other hand, the continuous fiber 129 proceeds on the outer peripheral side of the shaping material 100 so as to approach the continuous fiber 128. The continuous fiber 129 proceeds on the outer peripheral side of the shaping material 100 so as to decrease the bending radius.

As described above, in the shaping apparatus 10 according to the exemplary embodiment, the shaping material 100 is discharged to the stand 14 in a curved shape so that the continuous fiber 128 on the inner peripheral side of the shaping material 100 and the continuous fiber 129 on the outer peripheral side of the shaping material 100 approach each other.

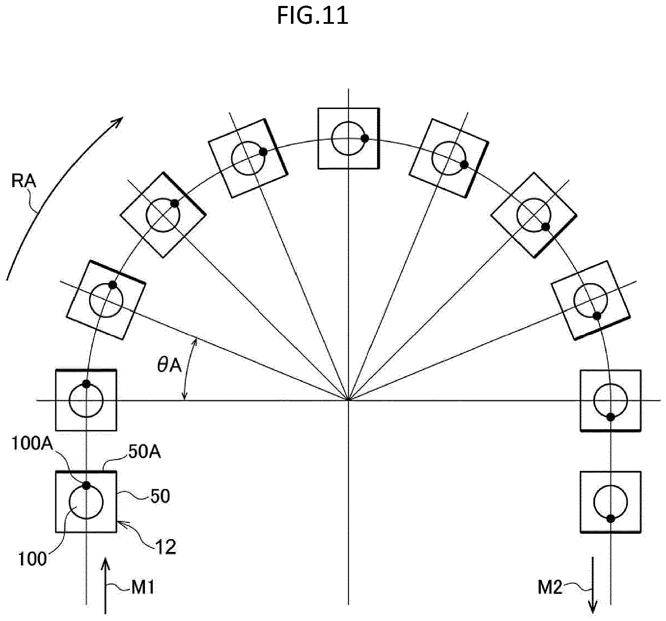

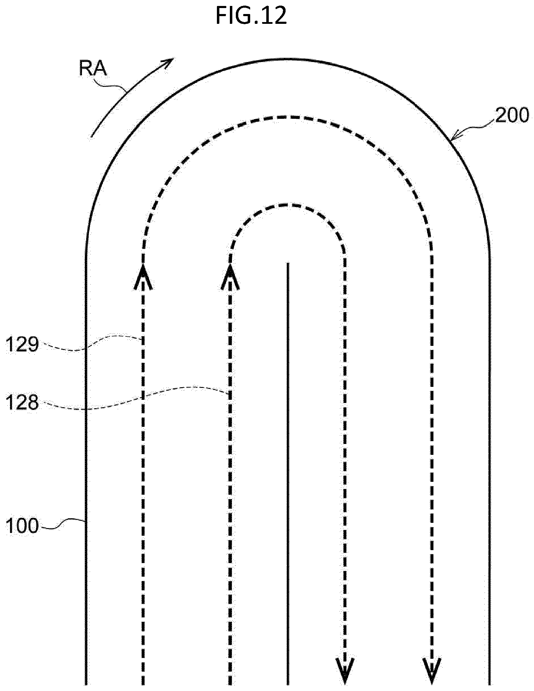

Here, in the curve movement of the shaping unit 12, as shown in Fig. 11, in a case where the shaping material 100 is not rotated in the opposite direction SB but is discharged to the stand 14 (hereinafter referred to as a first comparative example), the continuous fiber 128 and the continuous fiber 129 proceed maintaining a constant distance without approaching each other, as shown in Fig. 12. Therefore, the continuous fiber 129 proceeding on the outer peripheral side of the shaping material 100 is easily pulled to crack due to a longer distance of proceeding than that of the continuous fiber 128 proceeding on the inner peripheral side of the shaping material 100. As a result, the shaping material 100 easily cracks on the outer peripheral side. On the other hand, the proceeding distance of the continuous fiber 128 proceeding on the inner peripheral side of the shaping material 100 is shorter than that of the continuous fiber 129 proceeding on the outer peripheral side of the shaping material 100, and thus the respective portions are easily overlapped with each other by shortening. As a result, the shaping material 100 easily cracks even on the inner peripheral side. Therefore, in the first comparative example, cracks easily occur in the curved portion of the shaping material 100.

Further, in a case where the shaping material 100 is discharged to the stand 14 while being rotated in the bending direction RA (hereinafter referred to as a second comparative example), the continuous fiber 128 and the continuous fiber 129 are separated, and cracks easily occur in the curved portion of the shaping material 100.

Correspondingly, in the shaping apparatus 10 according to the exemplary embodiment, the shaping material 100 is discharged to the stand 14 in a curved shape so that the continuous fiber 128 on the inner peripheral side of the shaping material 100 and the continuous fibers 129 on the outer peripheral side of the shaping material 100 approach each other.

Therefore, the continuous fiber 129 proceeding on the outer peripheral side of the shaping material 100 is difficult to crack due to a shorter distance of proceeding than those of the first comparative example and the second comparative example. As a result, the shaping material 100 is difficult to crack on the outer peripheral side. In the continuous fiber 128 proceeding on the inner peripheral side of the shaping material 100, parts are difficult to overlap on the inner peripheral side with each other due to a longer distance of proceeding than those of the first comparative example and the second comparative example. As a result, the shaping material 100 is difficult to crack even on the inner peripheral side. Therefore, cracks in the curved portion of the shaping material 100 are reduced. In Fig. 10, in the first comparative example, positions where the continuous fiber 128 and the continuous fiber 129 proceed are indicated by two-dot chain lines.

Further, in the shaping apparatus 10, as described above, the shaping material 100 is discharged to the stand 14 while rotating in a range of less than 180 degrees in the curve movement of the shaping unit 12. Here, in a case where the shaping material 100 is discharged to the stand 14 while rotating by 180 degrees or more (hereinafter referred to as a third comparative example), the continuous fibers 120 are easily twisted. When the continuous fibers 120 are twisted, an undulation occurs in the shaping material 100 constituting the U-shaped part 200 of the shaped object, or the continuous fibers 120 are damaged.

Correspondingly, in the shaping apparatus 10, since the shaping material 100 is discharged to the stand 14 while rotating in a range of less than 180 degrees in the curve movement of the shaping unit 12, twisting of the continuous fibers 120 is reduced compared with the third comparative example.

In the shaping apparatus 10, the shaping material 100 is discharged to the stand 14 while rotating the shaping material 100 at a rotation angle $\theta X$ corresponding to a bending angle $\theta A$ of the shaping unit 12 in the curve movement of the shaping unit 12. Specifically, in a range where the bending angle $\theta A$ is less than 90 degrees, the rotation angle $\theta X$ of the shaping material 100 increases as the bending angle $\theta A$ increases. Accordingly, the continuous fiber 128 and the continuous fiber 129 gradually approach each other in the range where the bending angle $\theta A$ is less than 90 degrees as compared with a case where the rotation angle $\theta X$ of the shaping material 100 is constant regardless of the bending angle $\theta A$ of the shaping unit 12 (hereinafter referred to as a fourth comparative example). Therefore, cracks in the curved portion of the shaping material 100 are reduced as compared with the fourth comparative example.

In the shaping apparatus 10, in a range where the bending angle $\theta A$ is less than 90 degrees, the rotation angle $\theta X$ is set as a rotation angle larger than the bending angle $\theta A$.

Therefore, the continuous fiber 128 and the continuous fiber 129 approach each other as compared with a case where the shaping material is discharged to the discharged portion while being rotated to a rotation angle equal to or less than the bending angle (hereinafter referred to as a fifth comparative example). Therefore, as compared with the fifth comparative example, cracks in the curved portion of the shaping material 100 are reduced.

In the shaping apparatus 10, in a range where the bending angle $\theta A$ is less than 90 degrees, the rotation angle $\theta X$ is set as a rotation angle equal to or less than 90 degrees. Therefore, twisting of the continuous fibers 120 is reduced as compared with a configuration in which the shaping material 100 is rotated at a rotation angle more than 90 degrees. As a result, damage of the continuous fibers 120 and cracks in the curved portion of the shaping material 100 caused by the damage are reduced.

That is, according to the shaping apparatus 10, cracks in the curved portion of the shaping material 100 are reduced as compared with a configuration in which the shaping material 100 is discharged to the stand 14 while being rotated at a rotation angle $\theta X$ larger than the bending angle $\theta A$ and more than 90 degrees.

In the shaping apparatus 10, the rotation mechanism 62 rotates the shaping material 100 in the opposite direction SB by rotating the supply mechanism 20 and the conveyance portion 40 in the opposite direction SB in a range where the bending angle $\theta A$ is less than 90 degrees. Therefore, twisting of the continuous fibers 120 is reduced as compared with a configuration in which only the conveyance portion 40 rotates.

More specifically, in the shaping apparatus 10, the rotation mechanism 62 rotates the shaping material 100 in the opposite direction SB by rotating the supply portion 21, the winding roller 22, the impregnating portion 24, and the conveyance portion 40 in the opposite direction SB. Therefore, twisting of the continuous fibers 120 is reduced as compared with a configuration in which only a part of the supply portion 21, the winding roller 22, and the impregnating portion 24 and the conveyance portion 40 rotate.

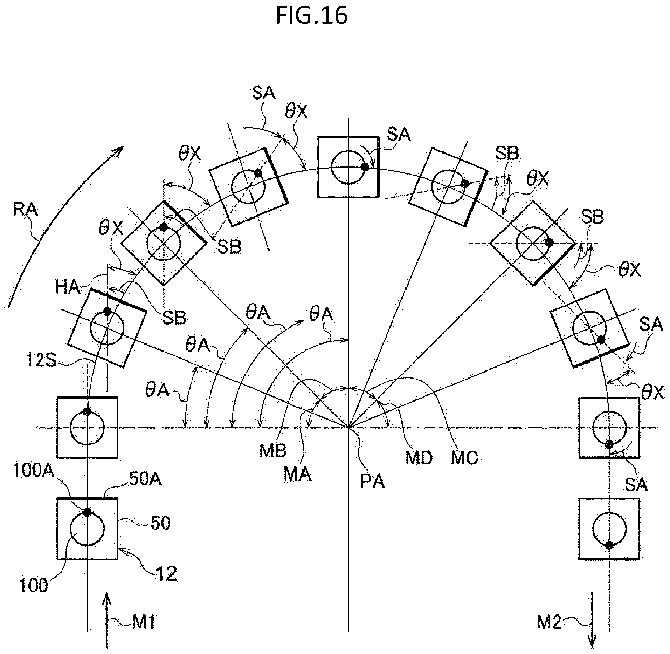

In the shaping apparatus 10, in a range where the bending angle $\theta A$ is more than 90 degrees and less than 180 degrees (a range of NB in Fig. 7), the rotation mechanism 62 rotates the shaping material 100 in a forward direction SA (see a direction of an arrow SA in Fig. 16) along the bending direction RA around the axis of the support 60 along the vertical direction to twist the shaping material 100 back. Therefore, twisting of the continuous fibers 120 is reduced as compared with a configuration in which the rotation mechanism 62 rotates the support 60 only in the opposite direction SB. As described above, in the exemplary embodiment, although the rotation mechanism 62 rotates the support 60 in the forward direction SA to rotate the shaping material 100 forcibly, the shaping material 100 may be rotated in the forward direction SA, for example, by releasing a restraining force that restrains the shaping material 100 (that is, make the shaping material 100 unrestrained) after rotating the shaping material 100 in the opposite direction SB.

In the shaping unit 12, when one layer is formed on the receiving surface 14A, the moving mechanism 18 moves the stand 14 downward. Thereafter, the above step is repeated, and a plurality of layers overlap to shape a shaped object.

(First Modification)

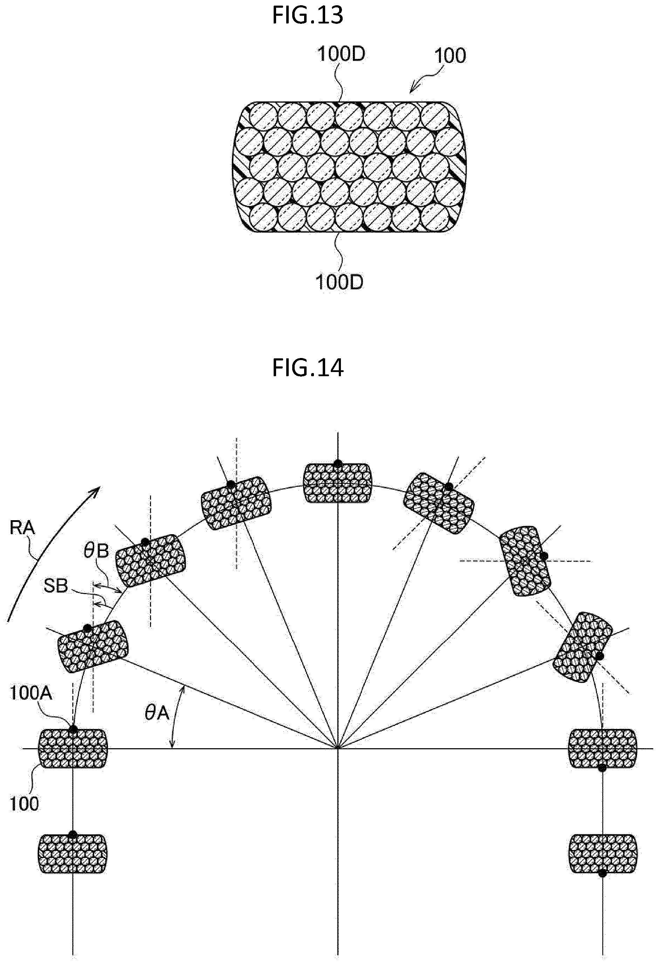

The shaping apparatus 10 may be configured to discharge the shaping material 100 to the stand 14 when the circular cross section of the shaping material 100 is deformed into a flat cross section (see Fig. 13).

Here, the flat cross section is a cross section in which a length in one direction of the cross section is longer than a length in an intersection direction intersecting with the one direction in the cross section, and a pair of planes (hereinafter, "flat plane 100D") facing in the intersection direction is formed. That is, the flat planes 100D are a pair of planes facing in a short-length direction of the flat shape.

The deformation of the shaping material 100 into the flat cross-sectional shape is performed by, for example, pressurizing and heating at the pair of conveyance rollers 42 and 44 of the conveyance portion 40. In this case, a heating portion which heats the shaping material 100 is included in at least one of the pair of conveyance rollers 42 and 44.

Also in this modification, as shown in Fig. 14, in the curve movement of the shaping unit 12, the shaping material 100 is rotated around the axis along the vertical direction in the opposite direction SB (see a direction of an arrow SB) on a side opposite to the bending direction RA.

(Second Modification)

The shaping unit 12 may be configured to change at least one setting of the rotation angle and a rotation speed of the shaping material 100 depending on a ratio of the continuous fibers to the shaping material 100.

Here, when the ratio of the continuous fibers to the shaping material 100 increases, rigidity of the shaping material 100 increases, and thus the shaping material 100 is difficult to rotate. In other words, when the ratio of the continuous fibers to the shaping material 100 increases, a rotation amount of the shaping material 100 may decrease with respect to a rotation amount of the support 60 by the rotation mechanism 62. In addition, response of rotation of the shaping material 100 in the discharging portion 50 may decrease with respect to the rotation of the support 60 due to the rotation mechanism 62.

Therefore, for example, in the case where the ratio of the continuous fibers to the shaping material 100 increases, the control unit 16 changes at least one setting of the rotation angle and the rotation speed of the shaping material 100 so that at least one of the rotation angle and the rotation speed of the shaping material 100 increases.

Accordingly, regardless of the ratio of the continuous fibers to the shaping material, rotation failure of the shaping material 100 (not rotating to a target rotation angle) is reduced as compared with a configuration in which the rotation angle and the rotation speed of the shaping material in the shaping unit are constant (hereinafter, the configuration is referred to as a sixth comparative example). As a result, cracks in the curved portion of the shaping material 100 are reduced as compared with the sixth comparative example.

The ratio of the continuous fibers to the shaping material 100 is changed by an amount of a resin supplied to the fiber bundle 110 in the impregnating portion 24. Specifically, when the amount of the resin supplied to the fiber bundle 110 in the impregnating portion 24 increases, the ratio of the continuous fibers to the shaping material 100 decreases, and when the amount of the resin supplied to the fiber bundle 110 in the impregnating portion 24 decreases, the ratio of the continuous fibers to the shaping material 100 increases. The control unit 16 changes at least one setting of the rotation angle and the rotation speed of the shaping material 100 based on a ratio of the continuous fibers to the shaping material 100 determined from the amount of the resin with respect to the shaping material 100.

In addition, in the case where the ratio of the continuous fibers to the shaping material 100 decreases, the control unit 16 may change at least one setting of the rotation angle and the rotation speed of the shaping material 100 so that at least one of the rotation angle and the rotation speed of the shaping material 100 decreases.

Further, setting of shaping conditions may be changed depending on the rotation angle and the rotation speed of the shaping material 100 in the shaping unit 12. The shaping conditions include a heating temperature of the heater 28A of the impregnating portion 24, heating time of the resin by the heater 28A, and the like.

Here, when at least one of the rotation angle and the rotation speed of the shaping material 100 increases, the twisting of the continuous fibers 120 increases, and an undulation is easy to occur in the shaping material 100 forming the U-shaped part 200 of the shaped object.

Therefore, in the case where at least one setting of the rotation angle and the rotation speed of the shaping material 100 is changed so that at least one of the rotation angle and the rotation speed of the shaping material 100 increases, for example, at least one of the heating temperature of the heater 28A of the impregnating portion 24 and the heating time of the resin by the heater 28A is increased.

Accordingly, regardless of the rotation angle and the rotation speed of the shaping material 100 in the shaping unit 12, the undulation is reduced in the shaping material 100 constituting the U-shaped part 200 of the shaped object and shaping failure of the shaped object is reduced as compared with the configuration in which the shaping conditions are constant.

(Third Modification)

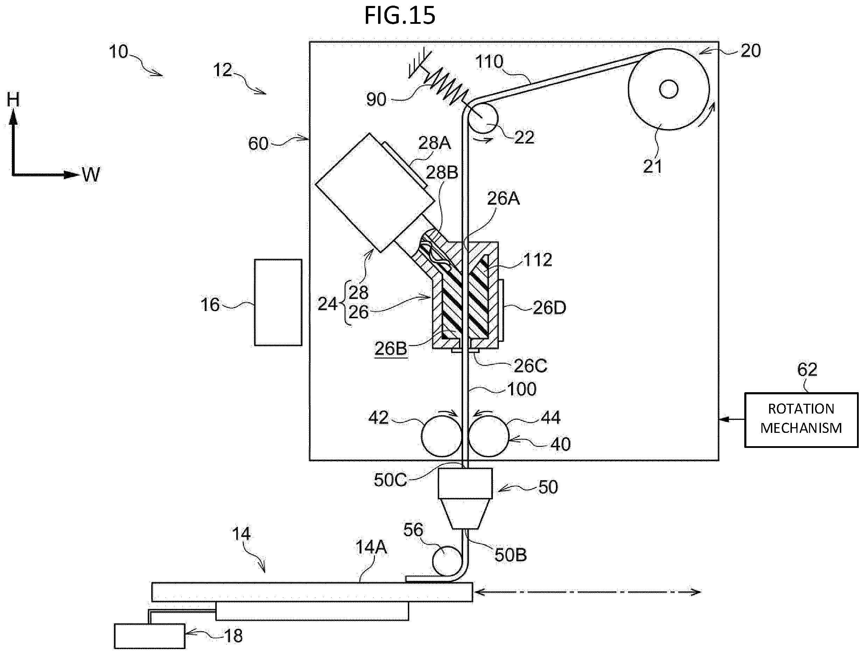

Further, as shown in Fig. 15, the shaping unit 12 may be configured to discharge the shaping material 100 to the stand 14 while rotating the shaping material 100 in the opposite direction SB when tension is applied to the shaping material 100.

Specifically, an applying portion 90 which applies tension to the shaping material 100 on the upstream side of the conveyance portion 40 is provided in the configuration shown in Fig. 15. Specifically, the applying portion 90 includes a pulling spring which pulls the winding roller 22 to a side (left side in Fig. 15) opposite to the supply portion 21 with respect to the winding roller 22. The applying portion 90 applies tension to the shaping material 100 by pulling the winding roller 22. Accordingly, the shaping unit 12 discharges the shaping material 100 to the stand 14 while rotating the shaping material 100 in the opposite direction SB when tension is applied to the shaping material 100. The tension applied to the shaping material 100 is set as, for example, 500 gf (that is, 4.9 N). Incidentally, the tension applied to the shaping material 100 is not limited thereto.

Here, in a configuration (hereinafter referred to as a seventh comparative example) in which the shaping material 100 is discharged to the base 14 when no tension is applied, rotation failure of the shaping material 100 (not rotating to a target rotation angle) may occur due to relaxation of the shaping material 100.

In the present modification, since the shaping unit 12 discharges the shaping material 100 to the stand 14 while rotating the shaping material 100 in the opposite direction SB when tension is applied to the shaping material 100, the rotation failure of the shaping material 100 (not rotating to the target rotation angle) is reduced as compared with the seventh comparative example. As a result, cracks in the curved portion of the shaping material 100 are reduced as compared with the seventh comparative example.

In addition, in a configuration (hereinafter referred to as an eighth comparative example) in which tension is applied to the shaping material 100 on the downstream side of the conveyance portion 40, conveyance failure (that a target conveyance amount cannot be conveyed) of the shaping material 100 may occur due to relaxation of the shaping material 100.

In this modification, since tension is applied to the shaping material 100 on the upstream side of the conveyance portion 40, conveyance failure (the target conveyance amount cannot be conveyed) of the shaping material 100 is reduced as compared with the eighth comparative example.

(Fourth Modification)

In the example shown in Fig. 7 described above, the shaping material 100 is rotated in the opposite direction SB in a range where the bending angle $\theta A$ is less than 90 degrees (a range of NA in Fig. 7), and then the shaping material 100 is rotated in the forward direction SA in a range where the bending angle $\theta A$ is more than 90 degrees and less than 180 degrees (a range of NB in Fig. 7), but is not limited thereto.

For example, operation of rotating the shaping material 100 in the forward direction SA may be repeated after the shaping material 100 is rotated in the opposite direction SB in a range where the bending angle $\theta A$ is 180 degrees or less. Specifically, as an example, as shown in Fig. 16, rotation operation of the shaping material 100 is executed. In the example shown in Fig. 16, the shaping material 100 is rotated in the opposite direction SB in a range where the bending angle $\theta A$ is equal to or less than 45 degrees (a range of MA in Fig. 16), and then the shaping material 100 is rotated in the forward direction SA in a range where the bending angle $\theta A$ is more than 45 degrees and equal to or less than 90 degrees (a range of MB in Fig. 16), so that the shaping material 100 is twisted back.

In a range where the bending angle $\theta A$ is equal to or less than 45 degrees (a range of MA in Fig. 16), specifically, the rotation angle $\theta X$ is set as a rotation angle equal to or more than the bending angle $\theta A$. More specifically, the rotation angle $\theta X$ is set as the same angle as the bending angle $\theta A$. Therefore, in a range where the bending angle $\theta A$ is equal to or less than 45 degrees, as shown in Fig. 16, the rotation angle $\theta X$ of the shaping material 100 increases as the bending angle $\theta A$ increases. Incidentally, in the range where the bending angle $\theta A$ is equal to or less than 45 degrees (a range of MA in Fig. 16), the rotation angle $\theta X$ may be set as a rotation angle larger than the bending angle $\theta A$ and equal to or less than 90 degrees.

In a range where the bending angle $\theta A$ is more than 45 degrees and equal to or less than 90 degrees (a range of MB in Fig. 16), the rotation angle $\theta X$ of the shaping material 100 decreases as the bending angle $\theta A$ increases. The rotation angle $\theta X$ is 0 degree when the bending angle $\theta A$ is 90 degrees.

Further, in the example shown in Fig. 16, the shaping material 100 is rotated in the opposite direction SB in a range where the bending angle $\theta A$ is more than 90 degrees and equal to or less than 135 degrees (a range of MC in Fig. 16), and then the shaping material 100 is rotated in the forward direction SA in a range where the bending angle θA is more than 135 degrees and less than 180 degrees (a range of MD in Fig. 16), so that the shaping material 100 is twisted back.

In the range where the bending angle θA is more than 90 degrees and equal to or less than 135 degrees (a range of MC in Fig. 16), as shown in Fig. 16, the rotation angle θX of the shaping material 100 increases as the bending angle θA increases. The rotation angle θX is, for example, 45 degrees when the bending angle θA is 135 degrees.

In a range where the bending angle θA is more than 135 degrees and equal to or less than 180 degrees (a range of MD in Fig. 16), the rotation angle θX of the shaping material 100 decreases as the bending angle θA increases. The rotation angle θX is 0 degree when the bending angle θA is 180 degrees.

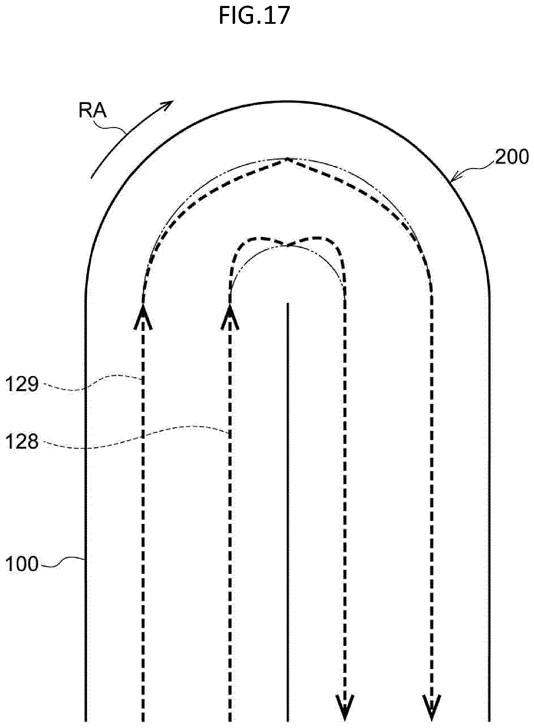

As described above, by repeating the operation of rotating the shaping material 100 in the opposite direction SB and then rotating the shaping material 100 in the forward direction SA, even though the rotation angle θX in the opposite direction SB in one operation is reduced, as shown in Fig. 17, the shaping material 100 is discharged to the stand 14 in a curved shape, so that the continuous fiber 128 (see Fig. 9) on the inner peripheral side of the shaping material 100 and the continuous fiber 129 (see Fig. 9) on the outer peripheral side of the shaping material 100 approach each other.

As a result, since a path length difference between the continuous fiber 128 and the continuous fiber 129 decreases, cracks in the curved portion of the shaping material 100 are reduced compared with the configuration in which the operation of rotating the shaping material 100 in the opposite direction SB and then rotating the shaping material 100 in the forward direction SA is performed only once.

In the example shown in Fig. 16, although a rotation direction of the shaping material 100 is changed every 45 degrees, the rotation direction of the shaping material 100 may be changed every 30 degrees, for example.

(Modification of Configuration which Rotates Shaping Material 100)

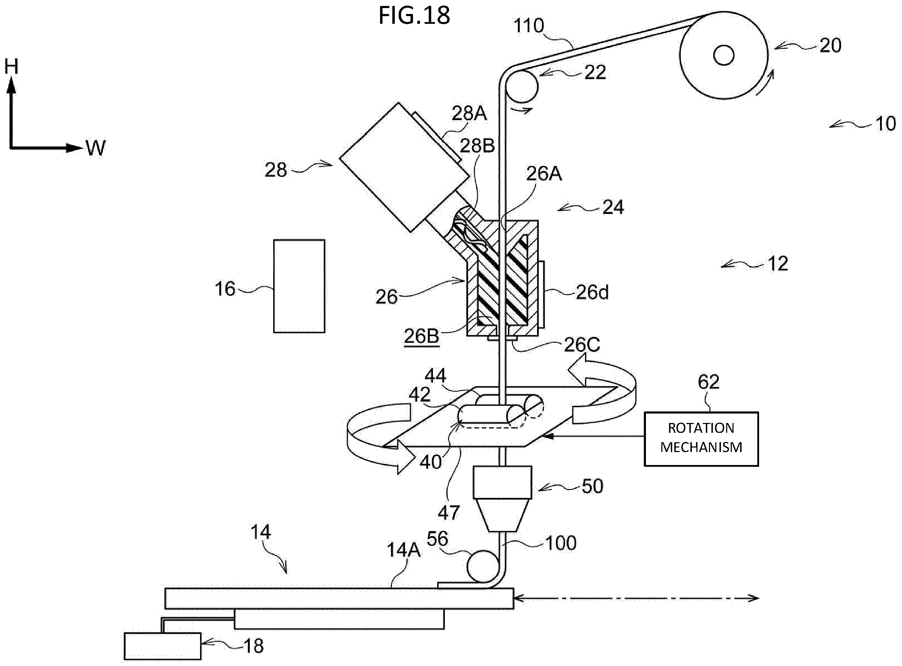

In the example shown in Fig. 1, the rotation mechanism 62 rotates the support 60 to rotate the shaping material 100 around its axis, but the invention is not limited thereto. For example, as shown in Fig. 18, the rotation mechanism 62 may rotate the conveyance portion 40 alone to rotate the shaping material 100 around its axis. In this configuration, as shown in Fig. 18, the support member 47 which rotatably supports the conveyance portion 40 is rotated around an axis along the vertical direction by a rotation member 62 to rotate the shaping material 100 around its axis.

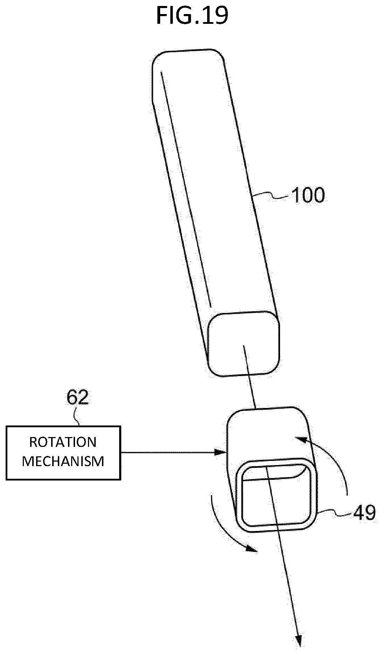

Further, when the cross section of the shaping material 100 is not circular, as shown in Fig. 19, a guide 49 as a passing portion through which the shaping material 100 is passed may be rotated around an axis along the vertical direction by the rotation mechanism 62 to rotate the shaping material 100 around its axis. In this configuration, the guide 49 is disposed, for example, between the conveyance portion 40 and the discharging portion 50 illustrated in Fig. 1.

A stress sensor may be provided on the support member 47 or the guide 49 to detect the stress (twist force) accumulated in the shaping material 100. Further, the rotation angle θX of the shaping material 100 may be controlled based on the detection result.

(Allowable Twist Angle of Shaping Material 100)

Here, an allowable twist angle of the shaping material 100 will be described.

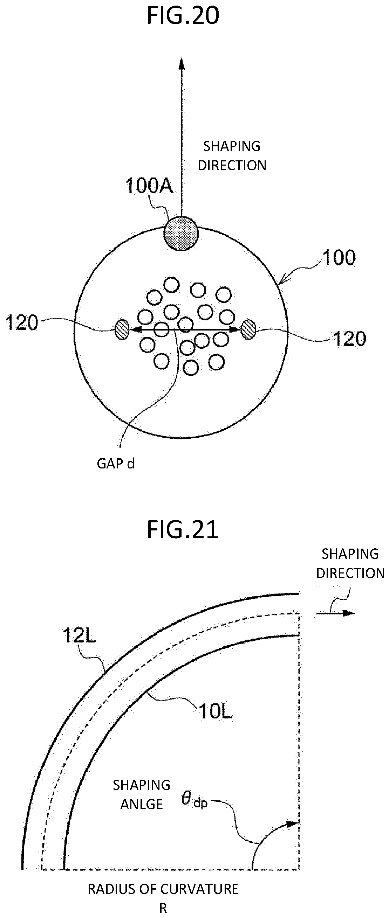

Among the plurality of continuous fibers 120 present in the shaping material 100, a distance between continuous fibers 120 which are farthest away along a perpendicular direction to the shaping direction is set as a distance d [mm] between fibers (see Fig. 20). When the shaping material 100 has a circular cross section, the distance between the continuous fibers 120 disposed on one end side and the other end side of the shaping material 100 in the perpendicular direction is obtained. The shaping direction is a direction in which the shaping unit 12 (specifically, the discharging portion 50) proceeds (see an arrow M1, an arrow M2, and the arrow RA in Fig. 7).

Assuming that the distance d [mm] between fibers is a fixed value without a change during the shaping, when a curve having a radius of curvature R [mm] and a shaping angle $\theta_{dp}$ [rad] is always shaped with the shaping material 100 facing the shaping direction, the difference between a path length (10L in Fig. 21) of the innermost fiber and a path length of the outermost fiber (12L in Fig. 21) is as follows (see Fig. 21). The shaping angle $\theta_{dp}$ corresponds to the bending angle θA in Fig. 7.

$$\text{Path length difference} = (R + 1/2d)\theta_{dp} - (R - 1/2d)\theta_{dp} = d\theta_{dp} \text{ [mm]}$$

At this time, since a path length of the center of the shaping material 100 is $R\theta_{dp}$ [mm], an elongation rate of the continuous fibers 120 is d/R.

In general, carbon fibers have a characteristic value of an elongation rate at break of pulling and breaking equal to or higher than it. For example, in a case where the elongation rate at break Ef is 1%, a fiber of 100 mm breaks when it is lengthened beyond 101 mm. Therefore, when d/R > Ef at the time of curve shaping, the continuous fibers 120 break and strength decreases.

In order to avoid breakage of the continuous fibers 120, it is necessary to decrease the distance d between fibers or to increase the radius of curvature to keep conditions d/R ≤ Ef. When the distance d between fibers is decreased, there are demerits that time required for shaping increases; when the radius of curvature R is increased, there arises a problem that shaping cannot be performed finely.

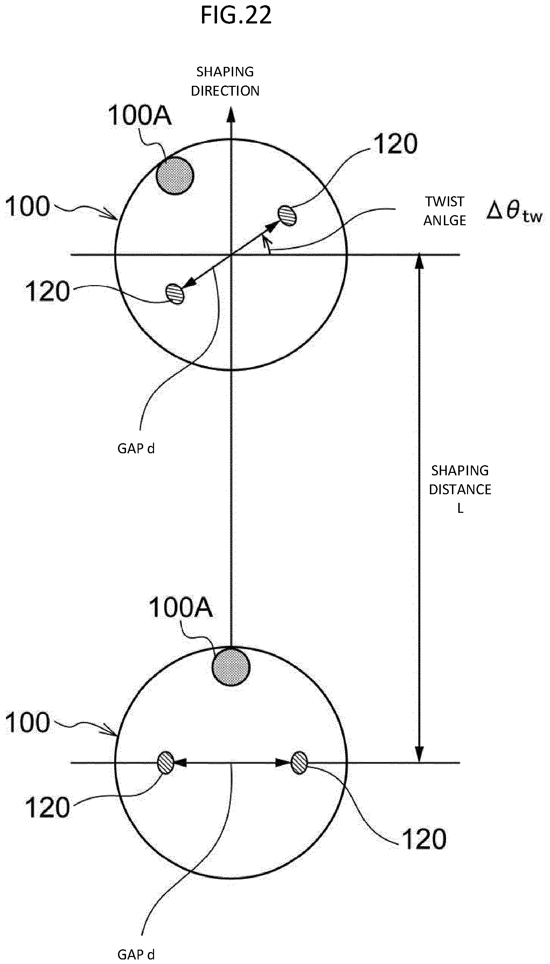

Here, the twist angle $\theta_{tw}$ [rad] obtained by twisting the shaping material 100 from the shaping direction is constant, the elongation rate of the continuous fibers in the case where the curve is shaped is dcos $\theta_{tw}$/R, and the elongation rate is reduced by twisting (see Fig. 22). The twist angle $\theta_{tw}$ corresponds to the rotation angle $\theta X$ in Fig. 7.

Even when the shaping material 100 is twisted, the path length difference is generated in the continuous fibers 120. For simple description, first, a case in which the shaping material 100 is twisted at the time of linear shaping is as follows.

As shown in Fig. 22, when the shaping material 100 is twisted by $\Delta\theta_{tw}$ [rad] during L [mm] shaping, components perpendicular to the shaping direction are offset in a reverse direction with respect to both ends of the continuous fiber 120, and a difference between components parallel to the shaping direction is the path length difference.

Therefore, the elongation rate is (dsin $\Delta\theta_{tw}$)/L.

When the above calculation is expanded at the time of curve shaping, it is as follows. L is R$\theta_{dp}$ [mm].

When $\Delta\theta_m$ coincides with a reverse direction of the shaping angle $\theta_{dp}$, that is, -$\theta_{dp}$, the elongation rate rate$_{tw}$ due to twisting is as follows.

$$\text{rate}_{tw} = (d\sin \Delta\theta_{tw})/R\theta_{dp} = (d\sin(-\theta_{dp}))/R\theta_{dp}$$

When x is a minimum value close to 0, sin x/x ≈ 1, so x = $\theta_{dp}$, and

$$\text{rate}_{tw} = -d/R.$$

The elongation rate rate$_{dp}$ by the curve shaping has the same value as that of the d/R with an opposite sign. The fiber elongation rate in the case of curve shaping by twisting the shaping material 100 in the reverse direction due to the curve shaping is offset against that due to the twisting, rate$_{tw}$ + rate$_{dp}$ = 0, the overall fiber elongation rate becomes zero, and utility to avoid breakage is expressed by a mathematical expression.

Therefore, since a condition that |rate$_{tw}$ + rate$_{dp}$| < Ef is always satisfied at the time of shaping, damage (specifically, breakage) of the continuous fibers 120 is avoided.

Then, in the exemplary embodiment, the following conditions 1 and 2a are satisfied when the shaping unit moves linearly relative to the receiving portion and discharges the shaping material on the receiving portion; and the following conditions 1 and 2b are satisfied when the shaping unit moves relative to the receiving portion in the curved shape and discharges the shaping material on the receiving portion:

$$\text{Condition 1: } |\theta_{tw}| \leq \pi/2$$

$$\text{Condition 2a: } |d\omega_{tw}| \leq Ef$$

$$\text{Condition 2b: } |d(1 + k_{tw})/R| \leq Ef$$

In which:

$\theta_{tw}$ is a twist angle of the shaping material as the rotation angle;
d [mm] is a farthest distance between the continuous fibers that are farthest away among the plurality of continuous fibers of the shaping material along the perpendicular direction to the proceeding direction of the shaping unit;
Ef is an elongation at break of the continuous fiber;
$\omega_{tw}$ [rad/mm] is a twist angle per unit moving distance when the shaping unit moves linearly relative to the receiving portion;
$\theta_{dp}$ [rad] is the bending angle of the discharging mechanism with respect to the receiving portion when the shaping unit moves relative to the discharge portion in the curved shape;

R [mm] is the radius of curvature of the curved shape; and
$k_{tw}$ is a ratio of the bending angle $\theta_{dp}$ to the twist angle $\theta_{tw}$.

According to the configuration, since damage (specifically, breakage) of the continuous fibers 120 is avoided as compared with a configuration satisfying only the condition 1, cracks in the curved portion of the shaping material 100 are reduced.

(According to the claimed invention a plurality of shaping units 12 are provided)

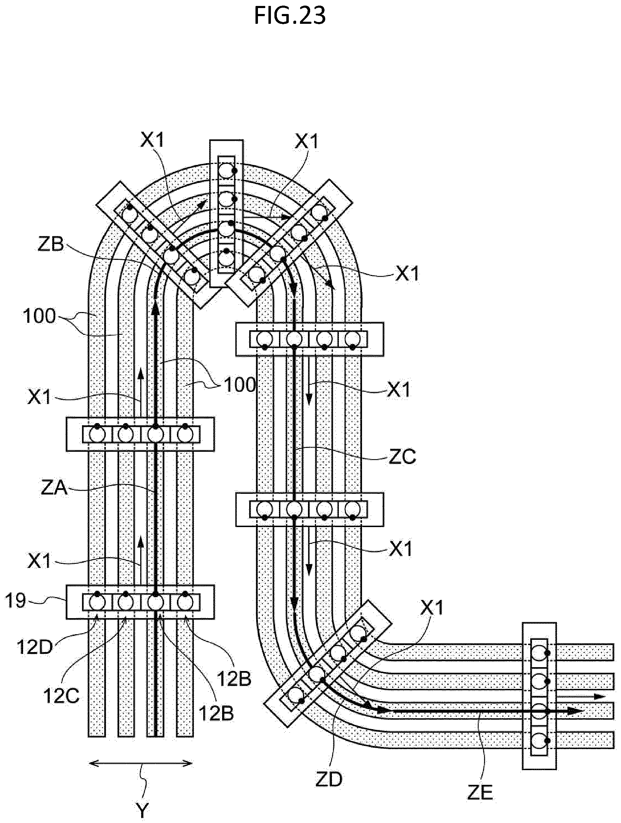

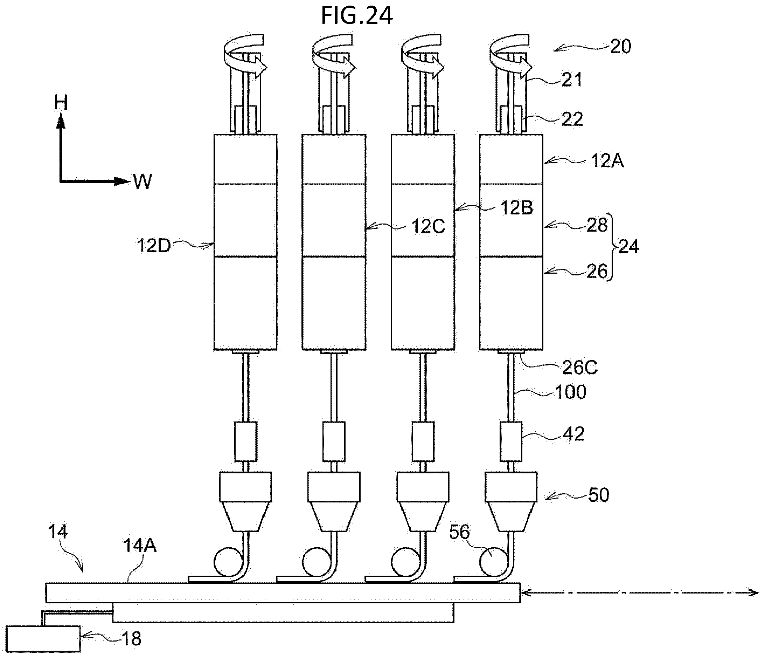

As illustrated in Figs. 23 and 24, the shaping apparatus 10 includes a plurality of shaping units 12. In the example shown in Figs. 23 and 24, four shaping units 12A, 12B, 12C, and 12D are included. In the present modification, the shaping apparatus 10 includes a support portion 19 extending in a perpendicular direction (Y1 direction in Fig. 23) to the proceeding direction of the four shaping units 12A, 12B, 12C, and 12D (XI direction in Fig. 23). The shaping units 12A, 12B, 12C, and 12D are supported by the support unit 19, and the shaping units 12A, 12B, 12C, and 12D move together in the proceeding direction since the support unit 19 moves in the proceeding direction.

Specifically, the support 60 (see Fig. 1 and Fig. 4) of each of the shaping units 12A, 12B, 12C, and 12D is rotatably supported by the support 19, and the rotation angle $\theta X$ (twist angle) of the shaping material 100 is changed in each of the shaping units 12A, 12B, 12C, and 12D.

In the present modification, a feeding speed of the shaping material 100 discharged from the discharging portion 50 (specifically, a conveyance speed of the shaping material 100 by the conveyance portion 40) and the rotation angle $\theta X$ (twist angle) of the shaping material 100 are controlled in each of the four shaping units 12.

Specifically, for example, in the curve movement (movement indicated by an arrow ZB in Fig. 23) of the shaping unit 12, the conveyance speed of the shaping material 100 by the conveyance portion 40 is increased in the shaping units 12B, 12C, and 12D which are disposed outside the shaping unit 12A disposed on an innermost side. Specifically, the conveyance speed of the conveyance portion 40 is controlled so that the speed gradually increases in an order of the shaping units 12A, 12B, 12C, and 12D. In the curve movement indicated by an arrow ZD in Fig. 23, the conveyance speed of the conveyance portion 40 is controlled so that the speed gradually increases in an order of the shaping units 12D, 12C, 12B, and 12A.

Accordingly, in the curve movement of the shaping unit 12, the feeding speed of the shaping material 100 increases on the outer peripheral side having a longer path length than the inner peripheral side.

Further, in the curve movement of the shaping unit 12, the rotation angle $\theta X$ (twist angle) is reduced in the shaping unit 12 which is disposed outside the shaping unit 12 disposed on the innermost side.

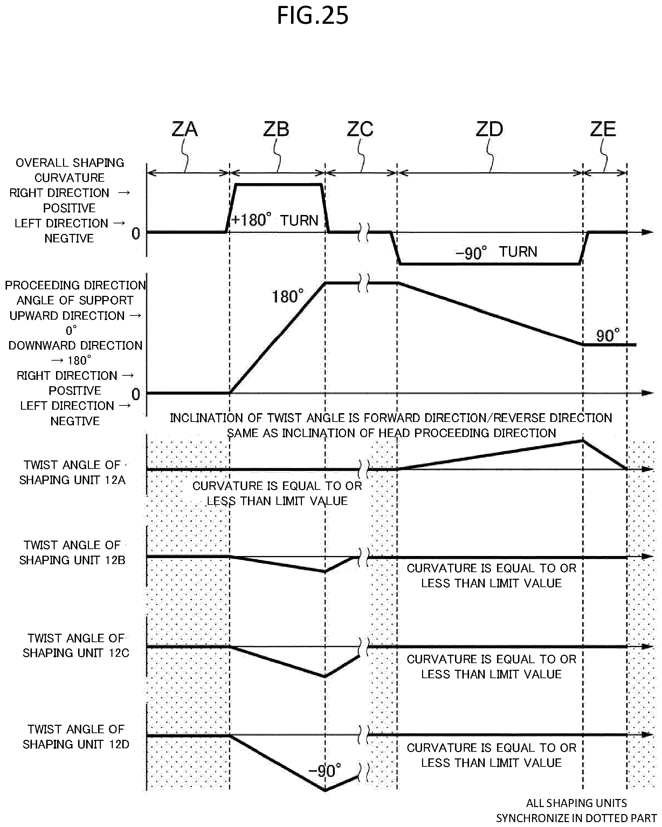

For example, the rotation angle $\theta X$ (twist angle) of each of the shaping units 12A, 12B, 12C, and 12D in a case of moving the shaping units 12A, 12B, 12C, and 12D including the curve movement as shown in Fig. 23 is controlled as shown in a graph of Fig. 25.

In Fig. 25, "overall shaping curvature" indicates overall shaping curvature of the shaping material 100 shaped by the shaping units 12A, 12B, 12C, and 12D. A case of bending in a right direction (that is, clockwise direction) in Fig. 23 is indicated by "positive", and a case of bending in a left direction (that is, counterclockwise direction) in Fig. 23 is indicated by "negative".

In Fig. 25, the "proceeding direction angle of support" indicates the proceeding direction of the support 19 (that is, shaping units 12B, 12C, and 12D). A case where the proceeding direction is an upward direction in Fig. 23 is indicated by "0°", a case where the proceeding direction is a downward direction in Fig. 23 is indicated by "180°", a case where the proceeding direction is a right direction in Fig. 23 is indicated by "positive", and a case where the proceeding direction is a left direction in Fig. 23 is indicated by "negative". In Fig. 23, the proceeding direction is indicated by an arrow XI. Movement ranges indicated by an arrow ZA, an arrow ZB, an arrow ZC, an arrow ZD, and an arrow ZE in Fig. 25 correspond to movement ranges indicated by the same arrows in Fig. 23.

Then, as shown in the graph of Fig. 25, twist angles of the shaping units 12A, 12B, 12C, and 12D are controlled according to the curvature (radius of curvature) in each curve movement. Specifically, in the movement range indicated by the arrow ZA, the rotation angle $\theta X$ (twist angle) is controlled so that the rotation angle $\theta X$ (twist angle) gradually increases in the order of the shaping units 12D, 12C, 12B, and 12A. When the curvature in the curve movement is small (that is, when the radius of curvature is large), since the elongation rate of the shaping material 100 is small, the shaping unit 12 in which the curvature is equal to or less than a predetermined threshold value (specifically, a limit value) does not execute rotation operation. In other words, when the curvature is more than the predetermined threshold value, the shaping unit 12 rotates the shaping material 100.

In the movement range indicated by the arrow ZD, the rotation angle $\theta X$ (twist angle) is controlled so that the rotation angle $\theta X$ (twist angle) in the shaping unit 12D becomes larger than that in the shaping units 12A, 12B, and 12C.

From above, in the curve movement of the shaping unit 12, the rotation angle $\theta X$ (twist angle) of the shaping material 100 decreases on the outer peripheral side having a smaller curvature than the inner peripheral side. As a result, twisting of the continuous fibers 120 is reduced as compared with a configuration in which the rotation angles of the shaping units 12A, 12B, 12C, and 12D are always the same. Further, in the present modification, since the shaping unit 12 rotates the shaping material 100 when the curvature is more than the predetermined threshold value, twisting of the continuous fibers 120 is reduced compared with a configuration in which the shaping material 100 is always rotated by the plurality of shaping units 12 regardless of the threshold value.

(Other Modifications)

In the exemplary embodiment, the stand 14 is moved with respect to the shaping unit 12, but the present invention is not limited thereto. For example, the shaping unit 12 may be moved with respect to the stand 14, and the shaping unit 12 may be configured to move relative to the stand 14 by moving at least one of the shaping unit 12 and the stand 14.

In the exemplary embodiment, the shaping apparatus 10 includes the impregnating portion 24, but may not include the impregnating portion 24. In this case, for example, the linear shaping material 100 in which the fiber bundle 110 is pre-impregnated with the resin 112 may be supplied from the supply portion 21.

In the present embodiment, the rotation angle θX is set as a rotation angle larger than the bending angle θA and equal to or less than 90 degrees, but the present invention is not limited thereto. For example, the rotation angle θX may be smaller than the bending angle θA. Further, the rotation angle θX may be an angle more than 90 degrees if it is in a range of less than 180 degrees.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

**Claims**

1. A shaping apparatus (10) comprising:

   a control unit (16) configured to control operation of each unit of the shaping apparatus (10);
   a receiving portion (14) configured to receive a linear shaping material (100) comprising a bundle (110) of continuous fibers (120) impregnated with a resin (112);
   a conveyance portion (40) configured to convey the shaping material from a supply mechanism (20) to a discharging portion (50);
   a support (60) supporting each portion of the supply mechanism and the conveyance portion (40);
   a rotation mechanism (62) configured to twist the shaping material around the axis along the vertical direction by rotating the support (60); and
   a shaping unit (12) configured to move relative to the receiving portion (14) in a curved shape and discharge the shaping material (100) on the receiving portion (14) while rotating the shaping material (100) in a range of less than 180 degrees to an opposite direction to a bending direction with respect to the receiving portion (14);
   **characterized in that**
   the shaping apparatus (10) comprises a plurality of the shaping units (12) configured to set a rotation angle of one shaping unit (12) to be larger than rotation angles of the other shaping units (12) in a case where one curved shape in which the one shaping unit (12) moves relative to the receiving portion (14) has larger curvature than the other curved shapes in which the other shaping units (12) move relative to the receiving portion (12).

2. The shaping apparatus (10) according to claim 1, wherein each of the shaping units (12) are configured to discharge the shaping material (100) on the receiving portion (14) while rotating the shaping material (100) at a rotation angle depending on a bending angle of each of the shaping units (12) with respect to the receiving portion (14).

3. The shaping apparatus (10) according to claim 2,
   wherein the rotation angle is larger than the bending angle.

4. The shaping apparatus (10) according to claim 3,
   wherein the rotation angle is equal to or less than 90 degrees.

**5.** The shaping apparatus (10) according to any one of claims 1 to 4, wherein each of the shaping units (12) are configured to discharge the shaping material (100) on the receiving portion (14) while rotating the shaping material to the opposite direction in a state where tension is applied to the shaping material (100).

**6.** The shaping apparatus (10) according to claim 1, wherein each of the shaping units (12) comprise an applying portion (90) configured to apply tension to the shaping material (100) on an upstream side to the conveyance portion (40).

**7.** The shaping apparatus (10) according to any one of claims 1 to 6,
wherein the supply mechanism (20) and the conveyance portion (40) are configured to rotate to the opposite direction to convey the shaping material (100) to the discharging portion (50) while rotating the shaping material to the opposite direction.

**8.** The shaping apparatus (10) according to claim 7,
wherein the supply mechanism (20) comprises:

a supply portion (21) configured to supply the bundle (110); and
an impregnating portion (24) configured to impregnate the bundle (110) supplied from the supply portion (21) with a resin (112),
wherein the supply portion (21), the impregnating portion (24), and the conveyance portion (50) are configured to rotate to the opposite direction to convey the shaping material (100) to the discharging portion (50) while rotating the shaping material (100) to the opposite direction.

**9.** The shaping apparatus (10) according to any one of claims 1 to 8,
wherein each of the shaping units (12) are configured to change setting of at least one of the rotation angle and a rotation speed of the shaping material depending on a ratio of the continuous fibers to the shaping material (100).

**10.** The shaping apparatus (10) according to claim 8 or 9,
wherein setting of shaping conditions is changed depending on the rotation angle and the rotation speed of the shaping material (100) in each of the shaping units (12).

**11.** The shaping apparatus (10) according to any one of claims 1 to 10,
wherein each of the shaping units (12) are configured to:

discharge the shaping material (100) on the receiving portion (14) while rotating the shaping material (100) in a range of less than 180 degrees to a direction opposite to a bending direction with respect to the receiving portion (14); and
discharge the shaping material (100) on the receiving portion (14) while rotating the shaping material (100) in a forward direction along the bending direction.

**12.** The shaping apparatus (10) according to claim 11, wherein, while each of the shaping units (12) move relative to the receiving portion (14) in the curved shape, each of the shaping units (12) are configured to repeatedly:

discharge the shaping material (100) on the receiving portion (14) while rotating the shaping material in a range of less than 180 degrees to a direction opposite to a bending direction with respect to the receiving portion (14); and
discharge the shaping material (100) on the receiving portion (14) while rotating the shaping units (12) in a forward direction along the bending direction.

**13.** The shaping apparatus (10) according to any one of claims 1 to 12,

wherein the following conditions 1 and 2a are satisfied when each of the shaping units (12) move linearly relative to the receiving portion (14) and discharges the shaping material (100) on the receiving portion (14); and
the following conditions 1 and 2b are satisfied when each of the shaping units (12) move relative to the receiving portion (14) in the curved shape and discharges the shaping material (100) on the receiving portion (14):

$$\text{Condition 1: } |\theta_{tw}| \leq \pi/2$$

Condition 2a: $|d\omega_{tw}| \le Ef$

Condition 2b: $|d(1 + k_{tw})/R| \le Ef$

wherein,

$\theta_{tw}$ is a twist angle of the shaping material as the rotation angle;
d [mm] is a farthest distance between the continuous fibers that are farthest away among the plurality of continuous fibers of the shaping material along the perpendicular direction to the proceeding direction of each of the shaping units (12);
Ef is an elongation at break of the continuous fiber;
$\omega_{tw}$ [rad/mm] is a twist angle per unit moving distance when each of the shaping units (12) move linearly relative to the receiving portion (14);
$\theta_{dp}$ [rad] is the bending angle of each of the shaping units (12) with respect to the receiving portion (14) when each of the shaping units (12) move relative to the discharge portion (50) in the curved shape;
R [mm] is the radius of curvature of the curved shape; and
$k_{tw}$ is a ratio of the bending angle $\theta_{dp}$ to the twist angle $\theta_{tw}$.

14. The shaping apparatus according to claims 1 to 13, wherein the other shaping units (12) are configured to rotate the shaping material (100) when the larger curvature is larger than a predetermined threshold value.

15. The shaping apparatus (10) according to any one of claims 1 to 14,
wherein each of the shaping units (12) is configured to:

move relative to the receiving portion (14) and
discharge the shaping material (100) on the receiving portion (14) in a curved shape so that the innermost continuous fiber on the inner peripheral side of the shaping material (100) and the outermost continuous fiber (112) on the outer peripheral side of the shaping material (100) approach each other.

**Patentansprüche**

1. Formungsvorrichtung (10), aufweisend:

eine Steuereinheit (16), welche dafür konfiguriert ist, den Betrieb jeder Einheit der Formungsvorrichtung (10) zu steuern;
einen Aufnahmeabschnitt (14), welcher dafür konfiguriert ist, ein lineares Formungsmaterial (100) aufzunehmen, welches ein Bündel (110) von kontinuierlichen Fasern (120) umfasst, die mit einem Harz (112) imprägniert sind;
einen Beförderungsabschnitt (40), welcher dafür konfiguriert ist, das Formungsmaterial von einem Zuführmechanismus (20) zu einem Ausgabeabschnitt (50) zu befördern;
einen Träger (60), welcher jeden Abschnitt des Zuführmechanismus und des Beförderungsabschnitts (40) trägt;
einen Drehmechanismus (62), welcher dafür konfiguriert ist, durch Drehen des Trägers (60) das Formungsmaterial um die Achse entlang der vertikalen Richtung zu verdrillen; und
eine Formungseinheit (12), welche dafür konfiguriert ist, sich relativ zu dem Aufnahmeabschnitt (14) in einer Kurvenform zu bewegen und das Formungsmaterial (100) auf den Aufnahmeabschnitt (14) auszugeben, während sie das Formungsmaterial (100) in einem Bereich von weniger als 180 Grad in eine Gegenrichtung zu einer Biegungsrichtung in Bezug auf den Aufnahmeabschnitt (14) dreht;
**dadurch gekennzeichnet, dass**
die Formungsvorrichtung (10) mehrere der Formungseinheiten (12) aufweist, dafür konfiguriert, in einem Fall, wenn eine Kurvenform, in welcher sich eine Formungseinheit (12) relativ zu dem Aufnahmeabschnitt (14) bewegt, eine stärkere Krümmung als die anderen Kurvenformen aufweist, in welchen sich die anderen Formungseinheiten (12) relativ zu dem Aufnahmeabschnitt (14) bewegen, einen Drehwinkel der einen Formungseinheit (12) so einzustellen, dass er größer ist als Drehwinkel der anderen Formungseinheiten (12).

2. Formungsvorrichtung (10) nach Anspruch 1,
wobei jede der Formungseinheiten (12) dafür konfiguriert ist, das Formungsmaterial (100) auf den Aufnahmeabschnitt (14) auszugeben, während sie das Formungsmaterial (100) in einem Winkel in Abhängigkeit von einem Biegungswinkel jeder der Formungseinheiten (12) in Bezug auf den Aufnahmeabschnitt (14) dreht.

3. Formungsvorrichtung (10) nach Anspruch 2,
   wobei der Drehwinkel größer als der Biegungswinkel ist.

4. Formungsvorrichtung (10) nach Anspruch 3,
   wobei der Drehwinkel kleiner oder gleich 90 Grad ist.

5. Formungsvorrichtung (10) nach einem der Ansprüche 1 bis 4,
   wobei jede der Formungseinheiten (12) dafür konfiguriert ist, in einem Zustand, in dem Spannung auf das Formungsmaterial (100) angewendet wird, das Formungsmaterial (100) auf den Aufnahmeabschnitt (14) auszugeben, während sie das Formungsmaterial in die Gegenrichtung dreht.

6. Formungsvorrichtung (10) nach Anspruch 1,
   wobei jede der Formungseinheiten (12) aufweist:
   einen Anwendungsabschnitt (90), welcher dafür konfiguriert ist, auf einer stromaufwärts angeordneten Seite des Beförderungsabschnitts (40) Spannung auf das Formungsmaterial (100) anzuwenden.

7. Formungsvorrichtung (10) nach einem der Ansprüche 1 bis 6,
   wobei der Zuführmechanismus (20) und der Beförderungsabschnitt (40) dafür konfiguriert sind, sich in die Gegenrichtung zu drehen, um das Formungsmaterial (100) zu dem Ausgabeabschnitt (50) zu befördern, während sie das Formungsmaterial in die Gegenrichtung drehen.

8. Formungsvorrichtung (10) nach Anspruch 7,
   wobei der Zuführmechanismus (20) aufweist:

   einen Zuführabschnitt (21), welcher dafür konfiguriert ist, das Bündel (110) zuzuführen; und
   einen Imprägnierabschnitt (24), welcher dafür konfiguriert ist, das von dem Zuführabschnitt (21) zugeführte Bündel (110) mit einem Harz (112) zu imprägnieren,
   wobei der Zuführabschnitt (21), der Imprägnierabschnitt (24) und der Beförderungsabschnitt (50) dafür konfiguriert sind, sich in die Gegenrichtung zu drehen, um das Formungsmaterial (100) zu dem Ausgabeabschnitt (50) zu befördern, während sie das Formungsmaterial (100) in die Gegenrichtung drehen.

9. Formungsvorrichtung (10) nach einem der Ansprüche 1 bis 8,
   wobei jede der Formungseinheiten (12) dafür konfiguriert ist, die Einstellung von mindestens einem aus dem Drehwinkel und einer Drehgeschwindigkeit des Formungsmaterials in Abhängigkeit von einem Verhältnis der kontinuierlichen Fasern zu dem Formungsmaterial (100) zu ändern.

10. Formungsvorrichtung (10) nach Anspruch 8 oder 9,
    wobei die Einstellung von Formungsbedingungen in Abhängigkeit von dem Drehwinkel und der Drehgeschwindigkeit des Formungsmaterials (100) in jeder der Formungseinheiten (12) geändert wird.

11. Formungsvorrichtung (10) nach einem der Ansprüche 1 bis 10,
    wobei jede der Formungseinheiten (12) konfiguriert ist zum:

    Ausgeben des Formungsmaterials (100) auf den Aufnahmeabschnitt (14), während sie das Formungsmaterial (100) in einem Bereich von weniger als 180 Grad in eine Gegenrichtung zu einer Biegungsrichtung in Bezug auf den Aufnahmeabschnitt (14) dreht; und
    Ausgeben des Formungsmaterials (100) auf den Aufnahmeabschnitt (14), während sie das Formungsmaterial (100) in eine Vorwärtsrichtung entlang der Biegungsrichtung dreht.

12. Formungsvorrichtung (10) nach Anspruch 11,
    wobei, während sich jede der Formungseinheiten (12) in der Kurvenform relativ zu dem Aufnahmeabschnitt (14) bewegt, jede der Formungseinheiten (12) dafür konfiguriert ist, wiederholt Folgendes durchzuführen:

    Ausgeben des Formungsmaterials (100) auf den Aufnahmeabschnitt (14), während sie das Formungsmaterial in einem Bereich von weniger als 180 Grad in eine Gegenrichtung zu einer Biegungsrichtung in Bezug auf den Aufnahmeabschnitt (14) dreht; und
Ausgeben des Formungsmaterials (100) auf den Aufnahmeabschnitt (14), während sie die Formungseinheiten (12) in eine Vorwärtsrichtung entlang der Biegungsrichtung dreht.

**13.** Formungsvorrichtung (10) nach einem der Ansprüche 1 bis 12,

wobei die folgenden Bedingungen 1 und 2a erfüllt werden, wenn sich jede der Formungseinheiten (12) relativ zu dem Aufnahmeabschnitt (14) linear bewegt und das Formungsmaterial (100) auf den Aufnahmeabschnitt (14) ausgibt; und
die folgenden Bedingungen 1 und 2b erfüllt werden, wenn sich jede der Formungseinheiten (12) relativ zu dem Aufnahmeabschnitt (14) in der Kurvenform bewegt und das Formungsmaterial (100) auf den Aufnahmeabschnitt (14) ausgibt:

$$\text{Bedingung 1:} \quad |\Theta_{tw}| \leq \pi/2$$

$$\text{Bedingung 2a:} \quad |d\omega_{tw}| \leq Ef$$

$$\text{Bedingung 2b:} \quad |d(1+k_{tw})/R| \leq Ef,$$

wobei
$\Theta_{tw}$ ein Verdrillungswinkel des Formungsmaterials als der Drehwinkel ist;
$d$ [mm] ein weitester Abstand zwischen den kontinuierlichen Fasern ist, die unter den mehreren kontinuierlichen Fasern des Formungsmaterials entlang der zu der Prozessrichtung jeder der Formungseinheiten (12) senkrechten Richtung am weitesten entfernt sind;
$Ef$ eine Bruchdehnung der kontinuierlichen Faser ist;
$\omega_{tw}$ [rad/mm] ein Verdrillungswinkel je Einheit der Bewegungsstrecke ist, wenn sich jede der Formungseinheiten (12) linear relativ zu dem Aufnahmeabschnitt (14) bewegt;
$\Theta_{dp}$ [rad] der Biegungswinkel jeder der Formungseinheiten (12) in Bezug auf den Aufnahmeabschnitt (14) ist, wenn sich jede der Formungseinheiten (12) in der Kurvenform relativ zu dem Ausgabeabschnitt (50) bewegt;
$R$ [mm] der Krümmungsradius der Kurvenform ist; und
$k_{tw}$ ein Verhältnis des Biegungswinkels $\Theta_{dp}$ zu dem Verdrillungswinkel $\Theta_{tw}$ ist.

**14.** Formungsvorrichtung nach Anspruch 1 bis 13,
wobei die anderen Formungseinheiten (12) dafür konfiguriert sind, das Formungsmaterial (100) zu drehen, wenn die stärkere Krümmung stärker ist als ein vorgegebener Schwellenwert.

**15.** Formungsvorrichtung (10) nach einem der Ansprüche 1 bis 14,
wobei jede der Formungseinheiten (12) konfiguriert ist zum:

Bewegen relativ zu dem Aufnahmeabschnitt (14) und
Ausgeben des Formungsmaterials (100) auf den Aufnahmeabschnitt (14) in einer Kurvenform, so dass sich die innerste kontinuierliche Faser auf der Innenumfangsseite des Formungsmaterials (100) und die äußerste kontinuierliche Faser (112) auf der Außenumfangsseite des Formungsmaterials (100) einander nähern.

**Revendications**

**1.** Appareil de mise en forme (10) comprenant :

une unité de commande (16) configurée pour contrôler le fonctionnement de chaque unité de l'appareil de mise en forme (10) ;
une partie de réception (14) configurée pour recevoir un matériau de mise en forme linéaire (100) comprenant un faisceau (110) de fibres continues (120) imprégnées avec une résine (112) ;
une partie de transport (40) configurée pour transporter le matériau de mise en forme d'un mécanisme d'alimentation (20) vers une partie de décharge (50) ;

un support (60) qui supporte chaque partie du mécanisme d'alimentation et la partie de transport (40) ;
un mécanisme de rotation (62) configuré pour déformer le matériau de mise en forme autour de l'axe le long de la direction verticale en faisant pivoter le support (60) ; et
une unité de mise en forme (12) configurée pour se déplacer par rapport à la partie de réception (14) en une forme incurvée et pour décharger le matériau de mise en forme (100) sur la partie de réception (14) tout en faisant pivoter le matériau de mise en forme (100) à moins de 180 degrés dans une direction opposée à une direction de cintrage par rapport à la partie de réception (14) ;
**caractérisé en ce que**
l'appareil de mise en forme (10) comprend une pluralité d'unités de mise en forme (12) configurées pour définir un angle de rotation d'une unité de mise en forme (12) comme étant supérieur aux angles de rotation des autres unités de mise en forme (12) lorsqu'une forme incurvée dans laquelle l'unité de mise en forme (12) se déplace par rapport à la partie de réception (14) présente une plus forte courbure que les autres formes incurvées dans lesquelles les autres unités de mise en forme (12) se déplacent par rapport à la partie de réception (12).

2. Appareil de mise en forme (10) selon la revendication 1,
dans lequel chacune des unités de mise en forme (12) est configurée pour décharger le matériau de mise en forme (100) sur la partie de réception (14) tout en faisant pivoter le matériau de mise en forme (100) à un angle de rotation qui dépend d'un angle de cintrage de chacune des unités de mise en forme (12) par rapport à la partie de réception (14).

3. Appareil de mise en forme (10) selon la revendication 2,
dans lequel l'angle de rotation est supérieur à l'angle de cintrage.

4. Appareil de mise en forme (10) selon la revendication 3,
dans lequel l'angle de rotation est égal ou inférieur à 90 degrés.

5. Appareil de mise en forme (10) selon l'une quelconque des revendications 1 à 4,
dans lequel chacune des unités de mise en forme (12) est configurée pour décharger le matériau de mise en forme (100) sur la partie de réception (14) tout en faisant pivoter le matériau de mise en forme dans la direction opposée dans un état dans lequel une tension est appliquée au matériau de mise en forme (100).

6. Appareil de mise en forme (10) selon la revendication 1,
dans lequel chacune des unités de mise en forme (12) comprend une partie d'application (90) configurée pour appliquer une tension au matériau de mise en forme (100) sur un côté amont par rapport à la direction de transport (40).

7. Appareil de mise en forme (10) selon l'une quelconque des revendications 1 à 6,
dans lequel le mécanisme d'alimentation (20) et la partie de transport (40) sont configurés pour pivoter dans la direction opposée afin de transporter le matériau de mise en forme (100) vers la partie de décharge (50) tout en faisant pivoter le matériau de mise en forme dans la direction opposée.

8. Appareil de mise en forme (10) selon la revendication 7,
dans lequel le mécanisme d'alimentation (20) comprend :

une partie d'alimentation (21) configurée pour fournir le faisceau (110) ; et
une partie d'imprégnation (24) configurée pour imprégner le faisceau (110) fourni par la partie d'alimentation (21) avec une résine (112),
dans lequel la partie d'alimentation (21), la partie d'imprégnation (24) et la partie de transport (50) sont configurées pour pivoter dans la direction opposée afin de transporter le matériau de mise en forme (100) vers la partie de décharge (50) tout en faisant pivoter le matériau de mise en forme (100) dans la direction opposée.

9. Appareil de mise en forme (10) selon l'une quelconque des revendications 1 à 8,
dans lequel chacune des unités de mise en forme (12) est configurée pour modifier le paramétrage d'au moins l'un de l'angle de rotation et d'une vitesse de rotation du matériau de mise en forme selon un rapport entre les fibres continues et le matériau de mise en forme (100).

10. Appareil de mise en forme (10) selon la revendication 8 ou 9,
dans lequel le paramétrage des conditions de mise en forme est modifié selon l'angle de rotation et la vitesse de rotation du matériau de mise en forme (100) dans chacune des unités de mise en forme (12).

11. Appareil de mise en forme (10) selon l'une quelconque des revendications 1 à 10,
dans lequel chacune des unités de mise en forme (12) est configurée pour :

décharger le matériau de mise en forme (100) sur la partie de réception (14) tout en faisant pivoter le matériau de mise en forme (100) à moins de 180 degrés dans une direction opposée à une direction de cintrage par rapport à la partie de réception (14) ; et
décharger le matériau de mise en forme (100) sur la partie de réception (14) tout en faisant pivoter le matériau de mise en forme (100) vers l'avant le long de la direction de cintrage.

12. Appareil de mise en forme (10) selon la revendication 11,
dans lequel, pendant que chacune des unités de mise en forme (12) se déplace par rapport à la partie de réception (14) dans la forme incurvée, chacune des unités de mise en forme (12) est configurée pour, de manière répétée :

décharger le matériau de mise en forme (100) sur la partie de réception (14) tout en faisant pivoter le matériau de mise en forme à moins de 180 degrés dans une direction opposée à une direction de cintrage par rapport à la partie de réception (14) ;
décharger le matériau de mise en forme (100) sur la partie de réception (14) tout en faisant pivoter les unités de mise en forme (12) vers l'avant le long de la direction de cintrage.

13. Appareil de mise en forme (10) selon l'une quelconque des revendications 1 à 12,

dans lequel les conditions suivantes 1 et 2a sont satisfaites lorsque chacune des unités de mise en forme (12) se déplace linéairement par rapport à la partie de réception (14) et décharge le matériau de mise en forme (100) sur la partie de réception (14) ; et
les conditions suivantes 1 et 2b sont satisfaites lorsque chacune des unités de mise en forme (12) se déplace par rapport à la partie de réception (14) dans la forme incurvée et décharge le matériau de mise en forme (100) sur la partie de réception (14) :

$$\text{Condition 1}: |\theta_{tw}| \leq \pi/2$$

$$\text{Condition 2a}: |d\omega_{tw}| \leq Ef$$

$$\text{Condition 2b}: |d(1 + k_{tw})/R| \leq Ef$$

où
$\Theta_{tw}$ correspond à un angle de torsion du matériau de mise en forme en guise d'angle de rotation ;
d [mm] correspond à une distance la plus longue entre les fibres continues qui sont les plus éloignées parmi la pluralité de fibres continues du matériau de mise en forme le long de la direction perpendiculaire dans la direction d'avancée de chacune des unités de mise en forme (12) ;
Ef correspond à un allongement lors de la rupture de la fibre continue ;
$\omega_{tw}$ [rad/mm] correspond à un angle de torsion par unité de distance de déplacement lorsque chacune des unités de mise en forme (12) se déplace linéairement par rapport à la partie de réception (14) ;
$\Theta_{dp}$ [rad] correspond à l'angle de cintrage de chacune des unités de mise en forme (12) par rapport à la partie de réception (14) lorsque chacune des unités de mise en forme (12) se déplace par rapport à la partie de décharge (50) en une forme incurvée ;
R [mm] correspond au rayon de courbure de la forme incurvée ; et
$k_{tw}$ correspond à un rapport entre l'angle de cintrage $\Theta_{dp}$ et l'angle de torsion $\Theta_{tw}$.

14. Appareil de mise en forme selon les revendications 1 à 13,
dans lequel les autres unités de mise en forme (12) sont configurées pour faire pivoter le matériau de mise en forme (100) lorsque la courbure la plus forte est supérieure à une valeur de seuil prédéterminée.

15. Appareil de mise en forme (10) selon l'une quelconque des revendications 1 à 14,

dans lequel chacune des unités de mise en forme (12) est configurée pour :

se déplacer par rapport à la partie de réception (14) et
décharger le matériau de mise en forme (100) sur la partie de réception (14) dans une forme incurvée de sorte que la fibre continue la plus interne sur le côté périphérique interne du matériau de mise en forme (100) et la fibre continue externe (112) sur le côté périphérique externe du matériau de mise en forme (100) s'approchent l'une de l'autre.

FIG.1

ROTATION MECHANISM

FIG.2

FIG.3

# FIG.4

EP 3 695 951 B1

FIG.5

16

16A — | | — MOVING MECHANISM — 18

16B — | | — IMPREGNATING PORTION — 24

16C — | | — CONVEYANCE PORTION — 40

16D — | | — ROTATION MECHANISM — 62

FIG.6

# FIG.7

# FIG.8

# FIG.9

RA

129(120)    128(120)

100

14    14A

# FIG.10

# FIG.11

FIG.12

# FIG.13

# FIG.14

FIG.15

EP 3 695 951 B1

FIG.16

FIG.17

FIG.18

EP 3 695 951 B1

## FIG.19

ROTATION
MECHANISM

62

100

49

# FIG.20

SHAPING
DIRECTION

100A

100

120

120

GAP d

# FIG.21

SHAPING
DIRECTION

12L

10L

SHAPING
ANLGE $\theta_{dp}$

RADIUS OF CURVATURE
R

# FIG.22

SHAPING
DIRECTION

100A

120

100

TWIST
ANLGE $\Delta\theta_{tw}$

120

GAP d

SHAPING
DISTANCE
L

100A

100

120

120

GAP d

# FIG.23

FIG.24

# FIG.25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10046511 B
- EP 2508327 A1
- WO 2018151074 A1
- WO 2018189062 A1